# EUROPEAN PATENT APPLICATION

(11) **EP 2 813 877 A1**
(43) Date of publication of application: **17.12.2014**
(21) Application number: 13746425.1
(22) Date of filing: 28.01.2013
(51) Int. Cl.: G02B 7/04, F03G 7/06, G03B 5/00, H04N 5/232

(54) **DRIVE DEVICE AND LENS UNIT**

(30) Priority: 07.02.2012 JP 2012023941
(71) Applicant: Konica Minolta, Inc., Tokyo 100-7015 (JP)
(72) Inventor: MORIKAWA, Takuma, Tokyo 1918511 (JP); KUBO, Naoki, Tokyo 1918511 (JP); HONDA, Yasuhiro, Tokyo 1918511 (JP); MATSUO, Takashi, Tokyo 1918511 (JP); HATA, Yoshiaki, Tokyo 1918511 (JP)
(74) Representative: Hoffmann Eitle
(86) International application number: PCT/JP2013/051741
(87) International publication number: WO 2013/118601

(57) **Abstract**

A drive device and a lens unit include a base member (110); a driven member (120) disposed at a prescribed distance from the base member (110) and having a flat plane (120p); a support member (130) coupling the base member (110) and the driven member (120) and supporting the driven member (120) so as to substantially maintain a prescribed distance between the base member (110) and the driven member (120) from start to end of movement of the driven member (120); and a driving member (140) driving the driven member (120) so as to move the flat plane (120p) in parallel from start to end of movement. The driving member (140) causes a linear shape-memory alloy wire to expand and contract, thereby moving the driven member (120).

## Description

### TECHNICAL FIELD

The present invention relates to a drive device and a lens unit.

### BACKGROUND ART

Examples of a device and a method for moving a flat plane of a driven plate so as to be kept in parallel from start to end of movement are disclosed in Japanese Laid-Open Patent Publication No. 2007-114585 (PTD 1), "Actuator Mechanism Using Suspension-wire for 2D Scanning" (Journal of Precision Engineering, Vol. 74, No. 1, 2008, pp. 102 to 106" (NPD 1), and Japanese Patent National Publication No. 2011-501245 (PTD 2).

In "an image-blurring correcting device and an imaging device" disclosed in PTD 1, an image-blurring correction device is disclosed that uses two sets of parallel link mechanisms and actuators in order to implement reduction in size of an optical camera-shake correction device.

In "Actuator Mechanism Using Suspension-wire for 2D Scanning" disclosed in NPD 1, a suspension wire mechanism is disclosed that uses an electromagnetic actuator in order to allow constant-speed scanning and random-access scanning by an MEMS (Micro Electro Mechanical Systems).

In "a shape-memory alloy drive device" disclosed in PTD 2, a one-dimensional drive device is proposed that includes a parallel link mechanism having a flat spring and a shape-memory alloy actuator in order to implement reduction in size of an autofocusing camera unit.

### CITATION LIST

### PATENT DOCUMENT

PTD 1: Japanese Laid-Open Patent Publication No. 2007-114585
PTD 2: Japanese Patent National Publication No. 2011-501245

### NON PATENT DOCUMENT

NPD 1: "Actuator Mechanism Using Suspension-wire for 2D Scanning", Journal of Precision Engineering, Vol. 74, No. 1, 2008, pp. 102 to 106.

### SUMMARY OF INVENTION

### TECHNICAL PROBLEM

According to "an image-blurring correction device and an imaging device" disclosed in PTD 1, the mechanism is complicated so that it is difficult to reduce the size of the device.

According to the "Actuator Mechanism Using Suspension-wire for 2D Scanning" disclosed in NPD 1, an actuator that drives a lens is disposed on the outside of the lens, which requires a certain space, thereby increasing the entire size of the device and also increasing the weight thereof. Accordingly, it is difficult to reduce the size of the device.

According to the "shape-memory alloy drive device" disclosed in PTD 2, driving can be carried out only in one dimension.

The present invention has been made to solve the above-described problems. An object of the present invention is to provide a drive device and a lens unit including a mechanism capable of moving a driven plate in the two-dimensional direction including an X direction and a Y direction while allowing reduction in size of the device.

### SOLUTION TO PROBLEM

A drive device according to the present invention includes a base member; a driven member disposed at a prescribed distance from the base member; a support member coupling the base member and the driven member, and supporting the driven member so as to substantially maintain the prescribed distance between the base member and the driven member from start to end of movement of the driven member; and a driving member driving the driven member so as to be moved in parallel from start to end of movement. The driving member causes a linear shape-memory alloy wire to expand and contract to move the driven member.

In another embodiment, the driving member is disposed between the base member and the driven member.

In another embodiment, the driving member has both ends each fixed to the base member, and an intermediate region fixed to the driven member.

In another embodiment, the driving member has both ends each fixed to the driven member, and an intermediate region fixed to the base member.

In another embodiment, the driving member is disposed between the base member and the support member.

In another embodiment, the driving member has both ends each fixed to the base member, and an intermediate region fixed to the support member.

In another embodiment, the driving member has both ends each fixed to the support member, and an intermediate region fixed to the base member.

In another embodiment, the driving member includes two shape-memory alloy wires.

In another embodiment, the two shape-memory alloy wires are located in line symmetry with respect to a defined axis.

In another embodiment, the two shape-memory alloy wires have ends on one side that are fixed to the base member at different positions and ends on the other side that are fixed to the driven member at the same position; or the two shape-memory alloy wires have ends on one side that are fixed to the driven member at different positions and ends on the other side that are fixed to the base member at the same position.

In another embodiment, the two shape-memory alloy wires are integrated in one shape-memory alloy wire. The one shape-memory alloy wire has both ends fixed to the base member at different positions, and an intermediate region fixed to the driven member; or the one shape-memory alloy wire has both ends fixed to the driven member at different positions, and an intermediate region fixed to the base member.

In another embodiment, the driven member has a first portion, a second portion, a third portion facing the first portion across the center of the driven member, and a fourth portion facing the second portion across the center of the driven member. The base member has a fifth portion facing the first portion, a sixth portion facing the second portion, a seventh portion facing the third portion, and an eighth portion facing the fourth portion.

Included as the shape-memory alloy wire are a first shape-memory alloy wire disposed between the first portion and the eighth portion, a second shape-memory alloy wire disposed between the fourth portion and the fifth portion, a third shape-memory alloy wire disposed between the second portion and the fifth portion, a fourth shape-memory alloy wire disposed between the first portion and the sixth portion, a fifth shape-memory alloy wire disposed between the third portion and the sixth portion, a sixth shape-memory alloy wire disposed between the second portion and the seventh portion, a seventh shape-memory alloy wire disposed between the fourth portion and the seventh portion, and an eighth shape-memory alloy wire disposed between the third portion and the eighth portion.

In another embodiment, the first shape-memory alloy wire and the fourth shape-memory alloy wire are integrated in one shape-memory alloy wire, the second shape-memory alloy wire and the seventh shape-memory alloy wire are integrated in one shape-memory alloy wire, the third shape-memory alloy wire and the sixth shape-memory alloy wire are integrated in one shape-memory alloy wire, and the fourth shape-memory alloy wire and the fifth shape-memory alloy wire are integrated in one shape-memory alloy wire.

In another embodiment, the base member has a first portion, a second portion, a third portion facing the first portion across the center of the base member, and a fourth portion facing the second portion across the center of the base member.

Included as the support member are a first support member coupling the first portion and the driven member, a second support member coupling the second portion and the driven member, a third support member coupling the third portion and the driven member, and a fourth support member coupling the fourth portion and the driven member.

Included as the linear shape-memory alloy wire are a first shape-memory alloy wire having one end fixed to the fourth portion, the other end fixed to the second portion, and an intermediate region fixed to the first support member; a second shape-memory alloy wire having one end fixed to the first portion, the other end fixed to the third portion, and an intermediate region fixed to the second support member; a third shape-memory alloy wire having one end fixed to the second portion, the other end fixed to the fourth portion, and an intermediate region fixed to the third support member; and a fourth shape-memory alloy wire having one end fixed to the third portion, the other end fixed to the first portion, and an intermediate region fixed to the fourth support member.

In another embodiment, the support member is a wire rod.

In another embodiment, in a junction between the support member and the base member, a low elasticity member that is lower in elasticity than the base member is provided between the support member and the base member.

In another embodiment, in a junction between the support member and the base member, a rotation bearing is provided between the support member and the base member.

In another embodiment, the driven member is located, as an initial position, in a center position of a moving range of the driven member.

In another embodiment, the driven member is located, as an initial position, in a position displaced from the center of a moving range of the driven member.

A lens unit according to the present invention includes a drive device according to any one described above; a lens provided in the driven member; and an imaging element disposed on the base member at an image formation position of light having passed through the lens. The shape-memory alloy wire is caused to expand and contract to move the lens such that the image formation position of the lens with respect to the imaging element can be changed.

In another aspect of a lens unit according to the present invention, the lens unit includes a drive device according to any one described above; a lens provided in the base member; and an imaging element disposed on the driven member at an image formation position of light having passed through the lens. The shape-memory alloy wire is caused to expand and contract to move the imaging element such that the image formation position of the lens with respect to the imaging element can be changed.

### ADVANTAGEOUS EFFECTS OF INVENTION

According to the present invention, it becomes possible to provide a drive device and a lens unit including a mechanism capable of moving a driven member in the two-dimensional direction including an X direction and a Y direction while allowing reduction in size of the device.

### BRIEF DESCRIPTION OF DRAWINGS

Fig. 1 is the first schematic diagram showing the configuration and the movement principle of a drive device in an embodiment, including (A) a diagram showing the initial state (before movement) and (B) a diagram showing the state after movement.
Fig. 2 is a schematic diagram showing the structure of a junction of a support member with a base plate in the embodiment, including (A) a diagram showing a structure in which the support member is directly joined to the base plate, and (B) a diagram showing a structure in which a low elasticity member is provided between the base plate and the support member.
Fig. 3 is the second schematic diagram showing the movement principle of the drive device in the embodiment, including (A) a diagram showing the initial state (before movement) and (B) a diagram showing the state after movement.
Fig. 4 is a schematic diagram showing the structure of the junction of the support member with the base plate in the embodiment, illustrating a structure in which a rotation bearing is provided between the support member and the base plate.
Fig. 5 is a perspective view showing a drive device in the first embodiment.
Fig. 6 is a plan view showing the drive device in the first embodiment.
Fig. 7 is a partially enlarged perspective view of a region surrounded by a line VII in Fig. 5, illustrating a diagram showing a fixing structure of a driving member provided in the base plate.
Fig. 8 is the first diagram showing the fixing structure of the driving member.
Fig. 9 is the second diagram showing the fixing structure of the driving member.
Fig. 10 is the third diagram showing the fixing structure of the driving member.
Fig. 11 is the fourth diagram showing the fixing structure of the driving member.
Fig. 12 is the fifth diagram showing the fixing structure of the driving member.
Fig. 13 is the sixth diagram showing the fixing structure of the driving member.
Fig. 14 is the seventh diagram showing the fixing structure of the driving member.
Fig. 15 is the eighth diagram showing the fixing structure of the driving member.
Fig. 16 is a perspective view showing the drive device in the second embodiment.
Fig. 17 is a plan view showing the drive device in the third embodiment.
Fig. 18 is the first schematic diagram showing a positioning method of the drive device in the third embodiment.
Fig. 19 is the second schematic diagram showing a positioning method of the drive device in the third embodiment.
Fig. 20 is the third schematic diagram showing a positioning method of the drive device in the third embodiment.
Fig. 21 is the first schematic diagram illustrating rotation control, including (A) a plan view and (B) a side view.
Fig. 22 is the second schematic diagram illustrating rotation control, including (A) a plan view and (B) a side view.
Fig. 23 is the first diagram illustrating rotation control in the third embodiment, including (A) a plan view and (B) a side view.
Fig. 24 is the second diagram (a plan view) illustrating rotation control in the third embodiment.
Fig. 25 is a perspective view showing a drive device in the fourth embodiment.
Fig. 26 is a partially enlarged perspective view of a region surrounded by a line XXVI in Fig. 25, illustrating a structure for fixing a shape-memory alloy wire to a driven plate.
Fig. 27 is a perspective view showing a drive device in the fifth embodiment.
Fig. 28 is a perspective view showing a drive device in the sixth embodiment.
Fig. 29 is a perspective view showing a drive device in the seventh embodiment.
Fig. 30 is a perspective view showing a drive device in the eighth embodiment.
Fig. 31 is a partially enlarged perspective view of a region surrounded by a line XXXI in Fig. 30, illustrating a structure for fixing a shape-memory alloy wire to a support member.
Fig. 32 is a perspective view showing a drive device in the ninth embodiment.
Fig. 33 is a perspective view showing a drive device in the tenth embodiment.
Fig. 34 is a perspective view showing a drive device in the eleventh embodiment.
Fig. 35 is the first plan view showing the initial position state of a driven plate in the twelfth embodiment.
Fig. 36 is the second plan view showing the initial position state of the driven plate in the twelfth embodiment.
Fig. 37 is a perspective view showing a drive device in the thirteenth embodiment.
Fig. 38 is a perspective view showing a drive device in the fourteenth embodiment.
Fig. 39 is a perspective view showing a lens unit in the fifteenth embodiment.
Fig. 40 is a perspective view showing a lens unit in the sixteenth embodiment.
Fig. 41 is a functional block diagram illustrating camera-shake correction control in the lens unit.
Fig. 42 is a flow diagram illustrating camera-shake correction control in the lens unit.
Fig. 43 is the first perspective view illustrating camera-shake correction in the lens unit.
Fig. 44 is the second perspective view illustrating camera-shake correction in the lens unit.
Fig. 45 is the third perspective view illustrating camera-shake correction in the lens unit.
Fig. 46 is a perspective view showing a lens unit in the seventeenth embodiment.

### DESCRIPTION OF EMBODIMENTS

A drive device and a lens unit according to embodiments in the present invention will be hereinafter described with reference to the drawings. In the embodiments described below, when the number, the quantity and the like are mentioned, the scope of the present invention is not necessarily limited thereto unless otherwise specified. The same or corresponding components are designated by the same reference characters, and description thereof may not be repeated. Furthermore, it has been originally intended to combine configurations described in each embodiment as appropriate.

### (Configuration and Movement Principle of Drive Device)

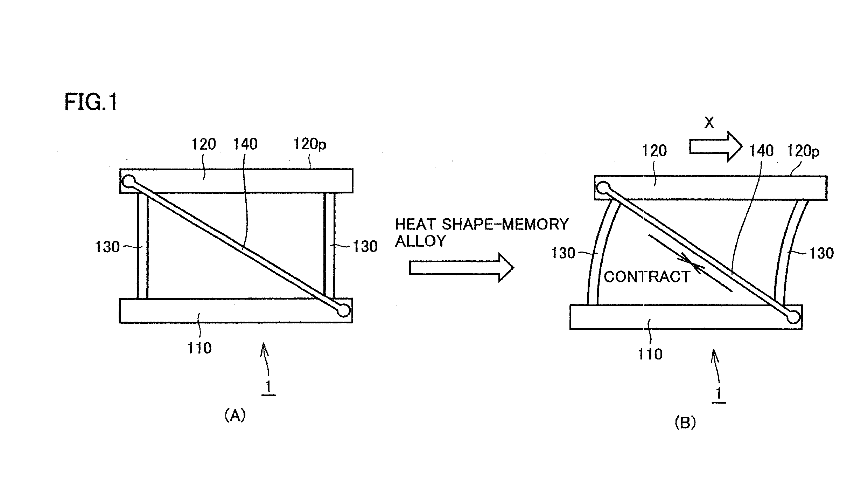

Referring to Fig. 1, the configuration and the movement principle of a drive device according to the present invention will be described. Fig. 1 is the first schematic diagram showing the configuration and the movement principle of a drive device in an embodiment, including (A) a diagram showing an initial state (before movement) and (B) a diagram showing the state after movement.

A drive device 1 includes a base plate (a base member) 110 and a driven plate (a driven member) 120 disposed at a prescribed distance from base plate 110 and having a flat plane 120p. Between base plate 110 and driven plate 120, a support member 130 is provided that couples base plate 110 and driven plate 120 and supports driven plate 120 so as to move flat plane 120p in parallel from start to end of movement. In addition, base plate 110 may have a flat plane, and base plate 110 and driven plate 120 are configured to move in parallel with this flat plane by support member 130.

This drive device 1 is provided with driving member 140 that drives driven plate 120 so as to move flat plane 120p in parallel from start to end of movement. Specifically, driving member 140 is disposed between base plate 110 and driven plate 120 so as to be inclined from the one end side of driven plate 120 toward the side of base plate 110 opposite to this one end side (in the diagonal direction as seen in side view of Fig. 1).

Although Fig. 1 shows the case where driving member 140 is disposed between base plate 110 and driven plate 120, the present invention is not limited to this configuration. Other configurations will be described in each of embodiments described later.

Base plate 110 and driven plate 120 each are mainly formed of a resin-molding product, for example, and formed in a quadrangular shape of about 10 mm × about 10 mm and having a thickness of about 0.3 mm to about 0.5 mm as seen in plan view by way of example. In the figure, the distance between the upper surface of base plate 110 and the lower surface of driven plate 120 is about 7 mm to about 8 mm.

Base plate 110 and driven plate 120 are held by support member 130 so as to be in parallel with each other. However, if flat plane 120p of driven plate 120 can be moved in parallel from start to end of movement, base plate 110 and driven plate 120 do not need to be disposed in parallel with each other.

Support member 130 is made using a suspension wire that is a wire rod having a wire thickness of about 80 µm to about 100 µm.

Driving member 140 is made using a linear shape-memory alloy wire. The shape-memory alloy wire is made using Ni-Ti-Pd based shape memory alloy element, for example. A prescribed current is applied to the shape-memory alloy wire used for driving member 140 to heat this shape-memory alloy wire, so that the shape-memory alloy wire undergoes contraction. Furthermore, when heating is stopped, the shape-memory alloy wire is restored to its original length.

In the present embodiment, referring to Fig. 1(B), the shape-memory alloy wire of driving member 140 is caused to expand or contract in the axial direction (in the linear longitudinal direction), thereby driving the driven plate 120 in the X direction in the figure. Support member 130 is disposed between base plate 110 and driven plate 120 so as to serve as a parallel link mechanism, thereby moving flat plane 120p in parallel from start to end of movement. In other words, in Fig. 1(B), driven plate 120 moves in the X direction with respect to base plate 110 in the state where the distance between driven plate 120 and base plate 110 is substantially maintained.

In order to form a parallel link mechanism, three or more support members 130 only have to be used in the state where all of support members 130 are not linearly arranged as seen in plan view.

### (Junction between Support Member 130 and Base Plate 110)

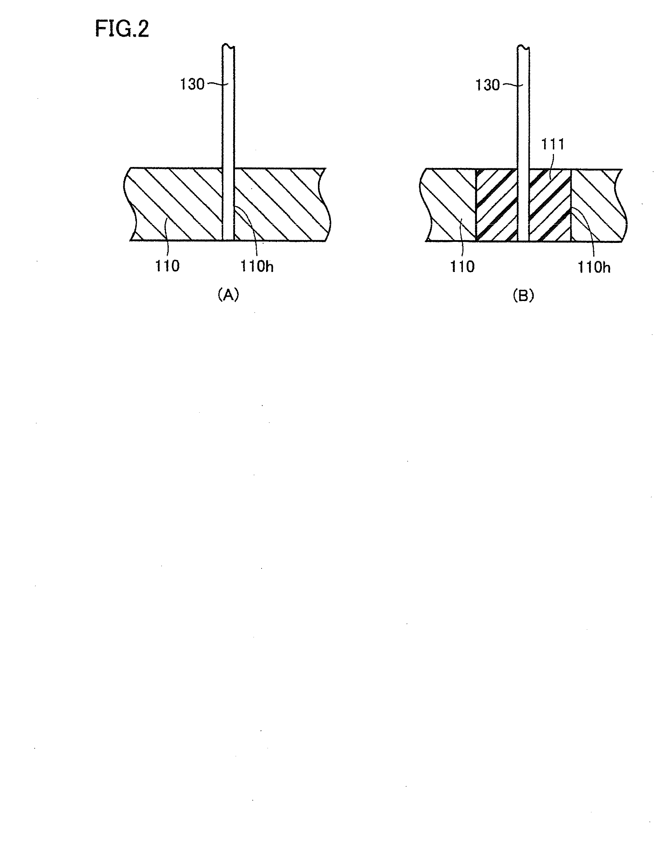

The junction between support member 130 and base plate 110 will be hereinafter described with reference to Figs. 2 to 4. Fig. 2 is a schematic diagram showing the structure of a junction of support member 130 with base plate 110, including (A) a diagram showing the structure in which support member 130 is directly joined to base plate 110, and (B) a diagram showing the structure in which a low elasticity member is provided between base plate 110 and support member 130.

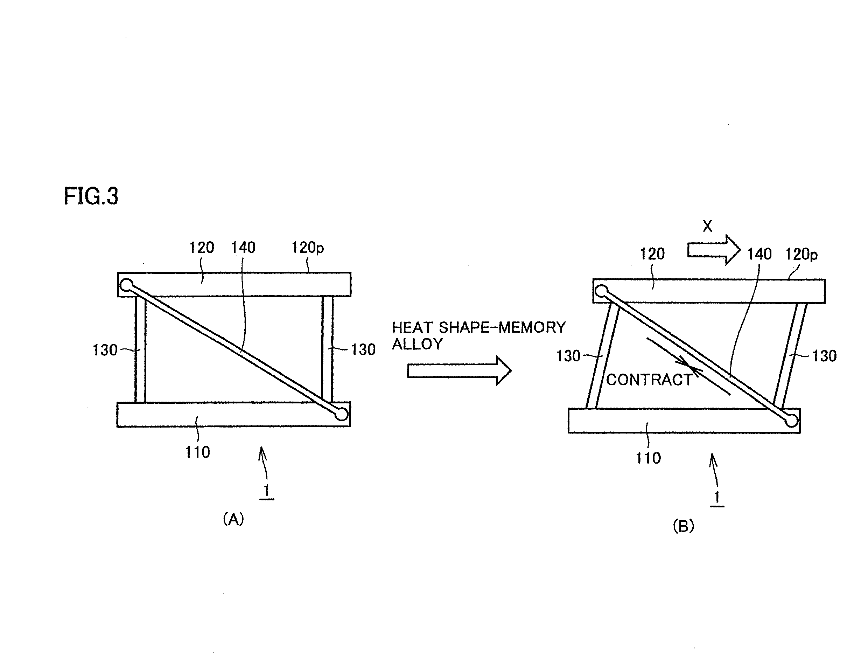

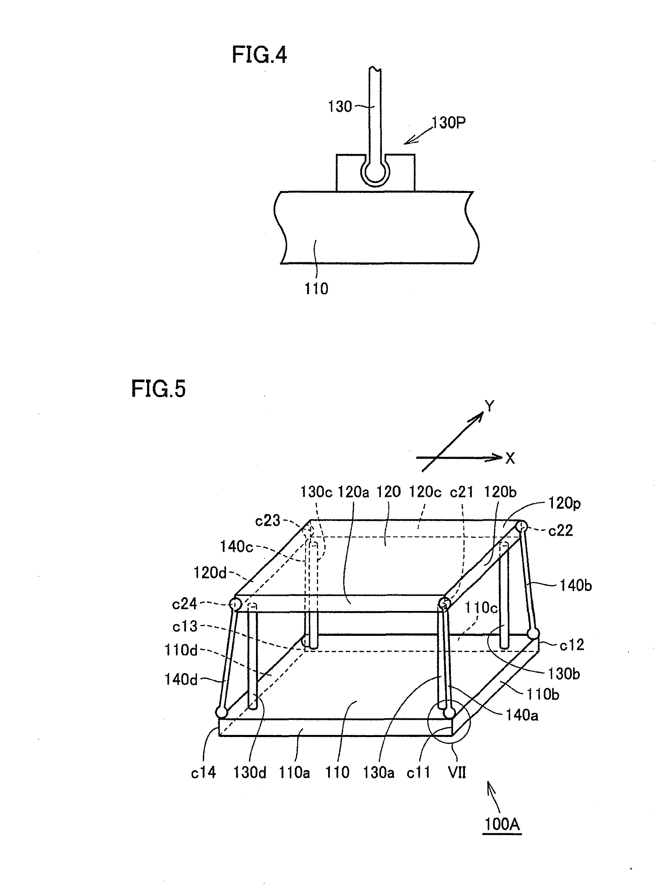

Fig. 3 is the second schematic diagram showing the movement principle of the drive device, including (A) a diagram showing the initial state (before movement) and (B) a diagram showing the state after movement. Fig. 4 is a schematic diagram showing the structure of the junction of support member 130 with base plate 110, illustrating the structure in which a rotation bearing 130P is provided between support member 130 and base plate 110.

When support member 130 is highly elastically deformable, support member 130 is elastically deformed in a curved shape, with reference to Fig. 1(B). In this case, referring to Fig. 2(A), in the junction between support member 130 and base plate 110, the end of support member 130 can be directly fixed to a fixing hole 110h provided in base plate 110.

Referring to Fig. 2(B), in fixing hole 110h provided in base plate 110, a low elasticity member 111 that is lower in elasticity than base plate 110 may be provided between support member 130 and base plate 110.

In the case where support member 130 is less elastically deformable, flat plane 120p of driven plate 120 needs to be moved in parallel without curving support member 130, with reference to the states shown in Figs. 3(A) and 3(B). In this case, referring to Fig. 4, in the junction between support member 130 and base plate 110, rotation bearing 130P is preferably provided between support member 130 and base plate 110.

While the junction between support member 130 and base plate 110 has been described with reference to Figs. 2 and 4 in the above, the same applies also to the junction between support member 130 and driven plate 120.

The above-described configuration is applied to the junction between support member 130 and base plate 110, and the junction between support member 130 and driven plate 120 in each embodiment described below.

### (First Embodiment)

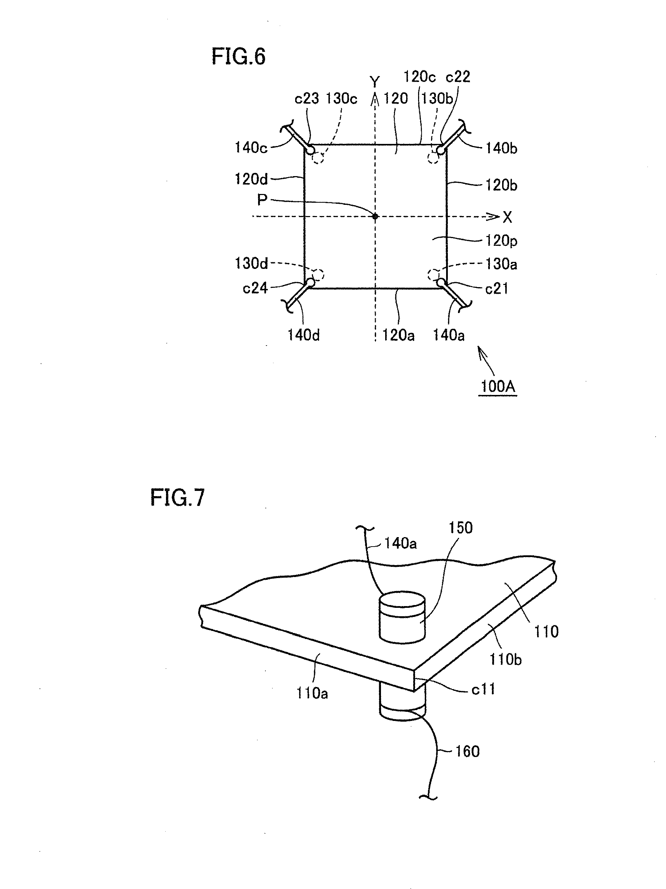

Referring to Figs. 5 and 6, a drive device 100A in the first embodiment will be hereinafter described. Fig. 5 is a perspective view showing drive device 100A in the present embodiment, and Fig. 6 is a plan view showing drive device 100A in the present embodiment. The movement principle described above is applied to this drive device 100A.

Drive device 100A includes base plate 110 formed in a square shape, and a driven plate 120 disposed at a prescribed distance from base plate 110 and having a flat plane 120p formed in a square shape.

Base plate 110 has a first side 110a, a second side 110b, a third side 110c, and a fourth side 11 0d. Base plate 110 also has a first corner portion c11 formed between first side 110a and second side 110b, a second corner portion c12 formed between second side 110b and third side 110c, a third corner portion c13 formed between third side 110c and fourth side 110d, and a fourth corner portion c14 formed between fourth side 110d and first side 110a.

Driven plate 120 has a first side 120a, a second side 120b, a third side 120c, and a fourth side 120d. Driven plate 120 also has a first corner portion c21 formed between first side 120a and second side 120b, a second corner portion c22 formed between second side 120b and third side 120c, a third corner portion c23 formed between third side 120c and fourth side 120d, and a fourth corner portion c24 formed between fourth side 120d and first side 120a.

In Figs. 5 and 6, the direction extending along first side 110a and third side 110c of base plate 110 is defined as an X direction while the direction extending along second side 110b and fourth side 110d of base plate 110 and extending orthogonal to the X direction is defined as a Y direction. The same also applies to each embodiment described below.

A first support member 130a and a first driving member 140a are provided between the vicinity of first corner portion c11 of base plate 110 and the vicinity of first corner portion c21 of driven plate 120. A second support member 130b and a second driving member 140b are provided between the vicinity of second corner portion c12 of base plate 110 and the vicinity of second corner portion c22 of driven plate 120.

A third support member 130c and a third driving member 140c are provided between the vicinity of third corner portion c13 of base plate 110 and the vicinity of third corner portion c23 of driven plate 120. A fourth support member 130d and a fourth driving member 140d are provided between the vicinity of fourth corner portion c14 of base plate 110 and the vicinity of fourth corner portion c24 of driven plate 120.

Referring to Fig. 6, in the case where base plate 110 and driven plate 120 each are formed in a square shape, first driving member 140a, second driving member 140b, third driving member 140c, and fourth driving member 140d are located such that, as seen from a center (center of gravity) position P, first driving member 140a and third driving member 140c are arranged in point symmetry while second driving member 140b and fourth driving member 140d are arranged in point symmetry.

Furthermore, with respect to the X-axis extending through centre position P, first driving member 140a and second driving member 140b are arranged in line symmetry while third driving member 140c and fourth driving member 140d are arranged in line symmetry.

In drive device 100A formed in the above-described configuration, for example, when a prescribed current is caused to simultaneously flow through first driving member 140a and second driving member 140b, first driving member 140a and second driving member 140b undergo contraction while third driving member 140c and fourth driving member 140d undergo expansion. Consequently, flat plane 120p of driven plate 120 is moved in parallel in the X direction.

Furthermore, when a prescribed current is caused to simultaneously flow through second driving member 140b and third driving member 140c, second driving member 140b and third driving member 140c undergo contraction while first driving member 140a and fourth driving member 140d undergo expansion. Consequently, flat plane 120p of driven plate 120 is moved in parallel in the Y direction.

### (Fixing Structure of Driving Member)

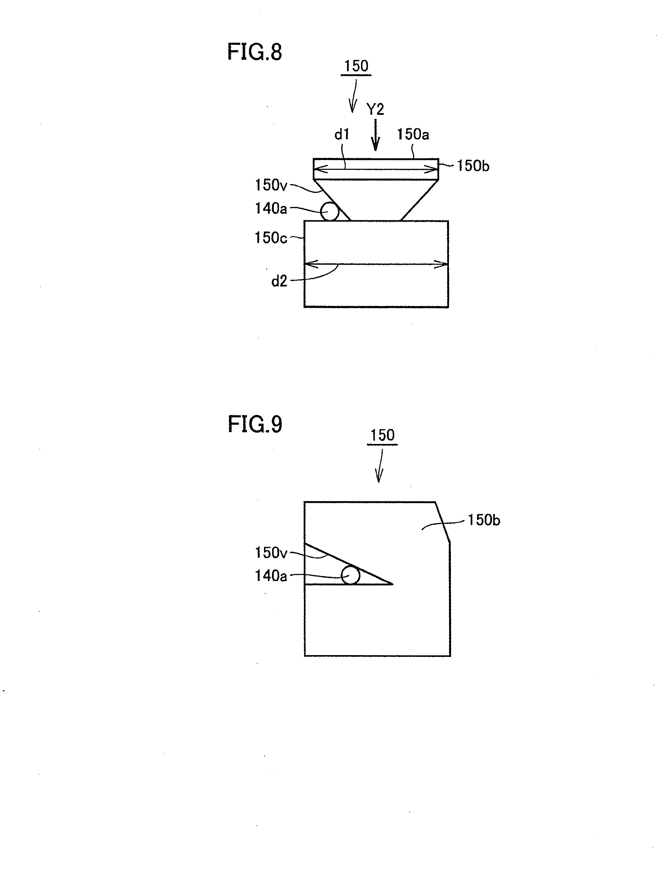

Then, the fixing structure of first driving member 140a to fourth driving member 140d will be hereinafter described with reference to Figs. 7 to 15. Fig. 7 is a partially enlarged perspective view of a region surrounded by a line VII in Fig. 5, illustrating a diagram showing the fixing structure of each driving member provided in the base plate. Figs. 8 to 15 are the first to eighth diagrams each showing the fixing structure of the driving member.

While the fixing structure of the driving member provided near first corner portion c11 of base plate 110 will be explained in the following description, the same applies also to second corner portion c12, third corner portion c13 and fourth corner portion c14. While the fixing structure of each driving member to base plate 110 will also be described, the same applies also to the fixing structure of each driving member to driven plate 120.

Referring to Fig. 7, a rod-shaped fixing member 150 is provided near first corner portion c11 of base plate 110 so as to extend through base plate 110 from the front surface to the back surface thereof. First driving member 140a has one end coupled to fixing member 150 on the front surface side of base plate 110. A lead wire 160 coupled to a control device provided outside is coupled to fixing member 150 on the back surface side of base plate 110.

Referring to Fig. 8, fixing member 150 is provided with a V-shaped groove 150v so as to extend around the side surface thereof. First driving member 140a is held in this groove 150v. Fixing member 150 has an end face 150a, to which a load is applied in the Y2 direction, thereby deforming an end 150b serving as a swage portion of fixing member 150, so that first driving member 140a is pressure-fixed (swaged).

In order to prevent first driving member 140a from being broken by extending end 150, which is deformed by swaging, so as to cover a non-deforming portion 150c, end 150b is formed so as to have a diameter d1 smaller than a diameter d2 of non-deforming portion 150c.

As described later, in the case where fixing member 150 is fixed to base plate 110 by press fitting, end 150b of fixing member 150 may be deformed when it is pressed. Accordingly, non-deforming portion 150c is pressed for press fitting. In this case, end 150b is similarly formed to have diameter d1 smaller than diameter d2 of non-deforming portion 150c so as to prevent end 150b from be caught in the press-fit hole of base plate 110.

Fig. 9 shows another shape of the swage portion. Groove 150v may be provided in a V shape in a part of the side surface of end 150b of fixing member 150.

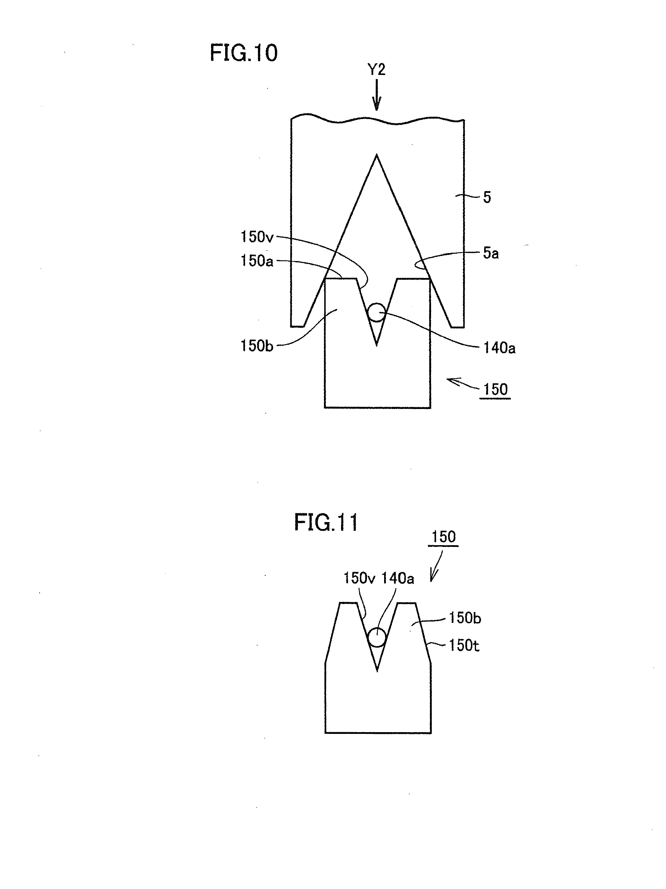

Fig. 10 shows still another shape of the swage portion. Groove 150v may be provided in end face 150a of fixing member 150. In this case, referring to Fig. 10, a swaging jig 5 having an inner surface provided with a taper 5a is placed to cover end 150b of fixing member 150 to apply pressure in the Y2 direction, so that fixing member 150 is swaged.

Fig. 11 shows still another shape of the swage portion. A taper 150t may be provided in end 150b of fixing member 150. Thereby, end 150b can be prevented from being caught at the time when fixing member 150 is fixed to base plate 110 by press fitting (fixing process) as described above.

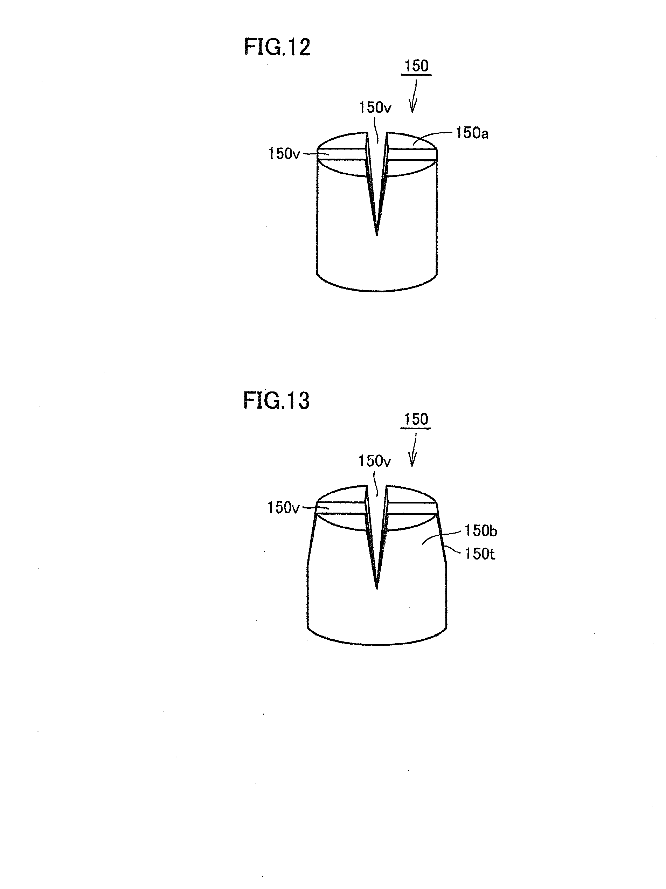

Fig. 12 shows still another shape of the swage portion. Two grooves 150v may be provided in a cross shape in end face 150a of fixing member 150. This increases the degree of freedom in the rotation direction at the time when fixing member 150 is press-fitted in base plate 110.

Fig. 13 shows still another shape of the swage portion. Taper 150t may be provided in end 150b of fixing member 150. Thereby, end 150b can be prevented from being caught at the time when fixing member 150 is fixed to base plate 110 by press fitting as described above.

It is to be noted that any of the shapes shown in Figs. 8 to 13 can readily be processed by means of well-known machining.

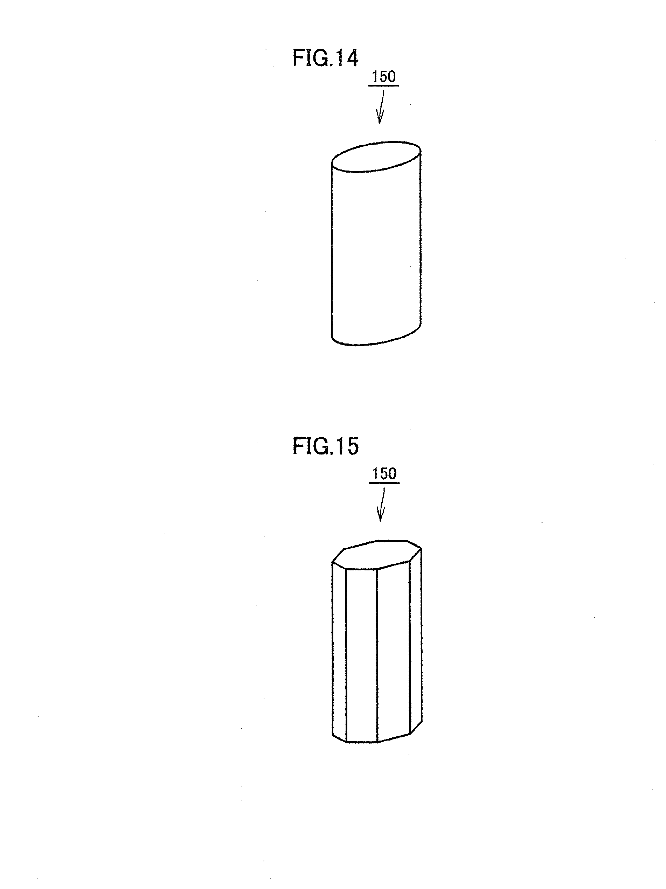

Referring to Fig. 14 or 15, the shape of fixing member 150 is formed in a cylindrical shape or in a polygonal columnar shape. As shown in Fig. 8, in the case where groove 150v is provided so as to extend around the side surface of fixing member 150, there is no requirement for the direction in which fixing member 150 is fixed to base plate 110. Accordingly, it is preferable that fixing member 150 is formed in a cylindrical shape as shown in Fig. 14.

On the other hand, as shown in Fig. 9, in the case where groove 150v is provided in a V shape in a part of the side surface of fixing member 150, there is a requirement for the direction in which fixing member 150 is fixed to base plate 110. Accordingly, it is preferable that fixing member 150 is formed in a polygonal columnar shape having a directional property, as shown in Fig. 15.

It is to be noted that fixing member 150 shown in Fig. 15 is formed in an octagonal columnar shape by way of example, but is not limited thereto. Fixing member 150 may be formed in an N-gonal columnar (N is a positive integer) shape or may be formed in a D-cut shape.

It is preferable that fixing member 150 is made using SUS (stainless) steel or copper-based metal material having a Young's modulus of about 50 GPa to 250 GPa in consideration of the holding force and the pressurizing force by swaging since first driving member 140a is held by the elastic force of swaged fixing member 150.

Furthermore, the above-described metal material can be prepared so that a desired Young's modulus can be achieved by the alloy ratio, the content of an additive, thermal treatment or the like. SUS steel is prepared so as to be suitable to swaging by its alloy composition, thermal treatment or the like.

Copper-based metal is an alloy formed mainly of copper, including pure copper, and prepared so as to be suitable to swaging by its alloy composition, thermal treatment or the like as in the case of SUS steel. In the case of copper-based metal, the manufacturing cost can be reduced without requiring a plating process and the like described later since this copper-based metal can readily be cut and directly soldered to a material.

When SUS steel is used for fixing member 150, it is preferable that its surface is subjected to a nickel plating process in order to improve the workability at the time of soldering a current-carrying member such as a lead wire and a flexible substrate for supplying a current to first driving member 140a.

In this way, first driving member 140a and the current-carrying member for supplying a current to first driving member 140a are connected by one rod-shaped member, that is, by fixing member 150, and this fixing member 150 is fixed while extending through base plate 110. This allows fixing member 150 to be arranged in a relatively small space corresponding to the cross-sectional area in the radial direction, so that the device can be reduced in size.

### (Second Embodiment)

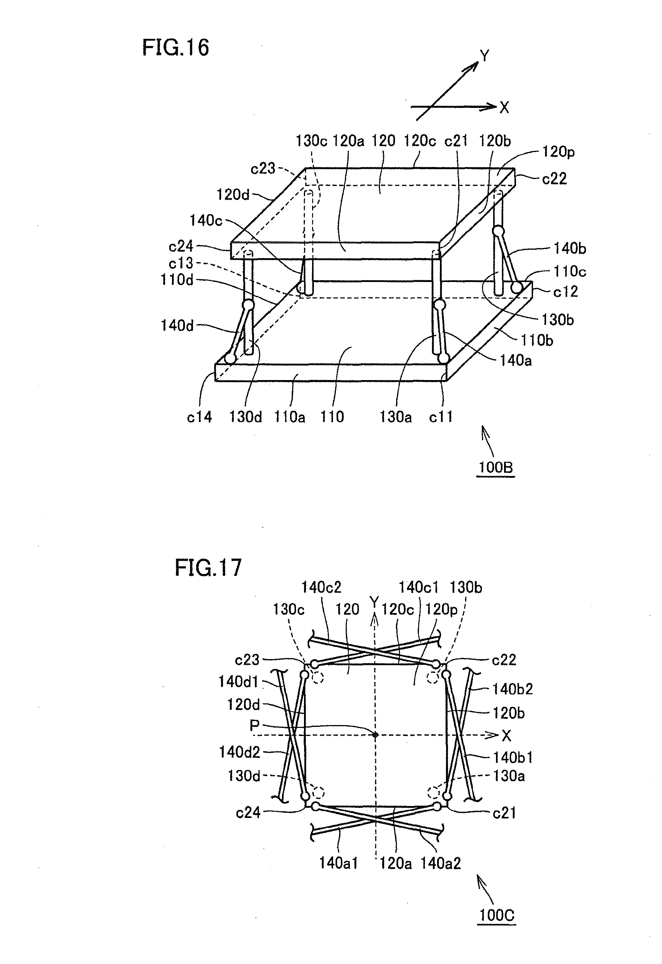

Then, referring to Fig. 16, a drive device 100B in the second embodiment will be hereinafter described. Fig. 16 is a perspective view showing drive device 100B in the present embodiment. It is to be noted that the components identical or corresponding to those in drive device 100A in the above-described first embodiment are designated by the same reference characters, and description thereof will not be repeated.

Drive device 100A in the first embodiment employs a configuration in which first driving member 140a to fourth driving member 140d are disposed between base plate 110 and driven plate 120. Drive device 100B in the present embodiment employs a configuration in which first driving member 140a to fourth driving member 140d are disposed between first support member 130a to fourth support member 130d, respectively, and driven plate 120.

Also in the case where this configuration is employed, when a prescribed current is caused to simultaneously flow through first driving member 140a and second driving member 140b as with drive device 100A in the first embodiment, first driving member 140a and second driving member 140b undergo contraction while third driving member 140c and fourth driving member 140d undergo expansion. Consequently, flat plane 120p of driven plate 120 is moved in parallel in the X direction.

Furthermore, when a prescribed current is caused to simultaneously flow through second driving member 140b and third driving member 140c, second driving member 140b and third driving member 140c undergo contraction while first driving member 140a and fourth driving member 140d undergo expansion. Consequently, flat plane 120p of driven plate 120 is moved in parallel in the Y direction.

### (Third Embodiment)

Then, a drive device 100C in the third embodiment will be hereinafter described with reference to Fig. 17. Fig. 17 is a plan view showing drive device 100C in the present embodiment. It is to be noted that the components identical or corresponding to those in drive device 100A in the above-described first embodiment are designated by the same reference characters, and description thereof will not be repeated.

Drive device 100C in the third embodiment employs a configuration in which eight driving members including a first driving member 140a1 to an eighth driving member 140d2 are disposed between base plate 110 and driven plate 120.

### (First Driving Member 140a1)

Specifically, first driving member 140a1 has one end fixed to the vicinity of first corner portion c21 (the first portion) of driven plate 120 on first side 120a of driven plate 120, and the other end fixed to the vicinity of fourth corner portion c14 (the eighth portion) of base plate 110. Accordingly, first driving member 140a1 is disposed between base plate 110 and driven plate 120 so as to be inclined from the one end side of driven plate 120 toward the side of base plate 110 opposite to this one end side.

### (Second Driving Member 140a2)

Furthermore, second driving member 140a2 has one end fixed to the vicinity of fourth corner portion c24 (the fourth portion) of driven plate 120 on first side 120a of driven plate 120, and the other end fixed to the vicinity of first corner portion c11 (the fifth portion) of base plate 110. Accordingly, second driving member 140a2 is disposed between base plate 110 and driven plate 120 so as to be inclined from the one end side of driven plate 120 toward the side of base plate 110 opposite to this one end side (to cross first driving member 140a1).

### (Third Driving Member 140b1)

Similarly, third driving member 140b1 has one end fixed to the vicinity of second corner portion c22 (the second portion) of driven plate 120 on second side 120b of driven plate 120, and the other end fixed to the vicinity of first corner portion c11 (the fifth portion) of base plate 110. Accordingly, third driving member 140b1 is disposed between base plate 110 and driven plate 120 so as to be inclined from the one end side of driven plate 120 toward the side of base plate 110 opposite to this one end side.

### (Fourth Driving Member 140b2)

Furthermore, fourth driving member 140b2 has one end fixed to the vicinity of first corner portion c21 (the first portion) of driven plate 120 on second side 120b of driven plate 120, and the other end fixed to the vicinity of second corner portion c12 (the sixth portion) of base plate 110. Accordingly, fourth driving member 140b2 is disposed between base plate 110 and driven plate 120 so as to be inclined from the one end side of driven plate 120 toward the side of base plate 110 opposite to this one end side (to cross third driving member 140b1).

### (Fifth Driving Member 140c1)

Similarly, fifth driving member 140c1 has one end fixed to the vicinity of third corner portion c23 (the third portion) of driven plate 120 on third side 120c of driven plate 120, and the other end fixed to the vicinity of second corner portion c12 (the sixth portion) of base plate 110. Accordingly, fifth driving member 140c1 is disposed between base plate 110 and driven plate 120 so as to be inclined from the one end side of driven plate 120 toward the side of base plate 110 opposite to this one end side.

### (Sixth Driving Member 140c2)

Furthermore, sixth driving member 140c2 has one end fixed to the vicinity of second corner portion c22 (the second portion) of driven plate 120 on third side 120c of driven plate 120, and the other end fixed to the vicinity of third corner portion c13 (the seventh portion) of base plate 110. Accordingly, sixth driving member 140c2 is disposed between base plate 110 and driven plate 120 so as to be inclined from the one end side of driven plate 120 toward the side of base plate 110 opposite to this one end side (to cross fifth driving member 140c1).

### (Seventh Driving Member 140d1)

Similarly, seventh driving member 140d1 has one end fixed to the vicinity of fourth corner portion c24 (the fourth portion) of driven plate 120 on fourth side 120d of driven plate 120, and the other end fixed to the vicinity of third corner portion c13 (the seventh portion) of base plate 110. Accordingly, seventh driving member 140d1 is disposed between base plate 110 and driven plate 120 so as to be inclined from the one end side of driven plate 120 toward the side of base plate 110 opposite to this one end side.

### (Eighth Driving Member 140d2)

Furthermore, eighth driving member 140d2 has one end fixed to the vicinity of third corner portion c23 (the third portion) of driven plate 120 on fourth side 120d of driven plate 120, and the other end fixed to the vicinity of fourth corner portion c14 (the eighth portion) of base plate 110. Accordingly, eighth driving member 140d2 is disposed between base plate 110 and driven plate 120 so as to be inclined from the one end side of driven plate 120 toward the side of base plate 110 opposite to this one end side (to cross seventh driving member 140d1).

In addition, as apparent also from Fig. 5, driven plate 120 has first corner portion c21 (the first portion), second corner portion c22 (the second portion), third corner portion c23 (the third portion), and fourth corner portion c24 (the fourth portion), in which third corner portion c23 (the third portion) is located to face first corner portion c21 (the first portion) across the center of driven plate 120 while fourth corner portion c24 (the fourth portion) is located to face second corner portion c22 (the second portion) across the center of driven plate 120.

Furthermore, as apparent also from Fig. 5, base plate 110 has first corner portion c11 (the fifth portion), second corner portion c12 (the sixth portion), third corner portion c13 (the seventh portion), and fourth corner portion c14 (the eighth portion), in which first corner portion c11 (the fifth portion) is located to face first corner portion c21 (the first portion), second corner portion c12 (the sixth portion) is located to face second corner portion c22 (the second portion), third corner portion c13 (the seventh portion) is located to face third corner portion c23 (the third portion), and fourth corner portion c14 (the eighth portion) is located to face fourth corner portion c24 (the fourth portion).

### (Positioning Method of Drive Device)

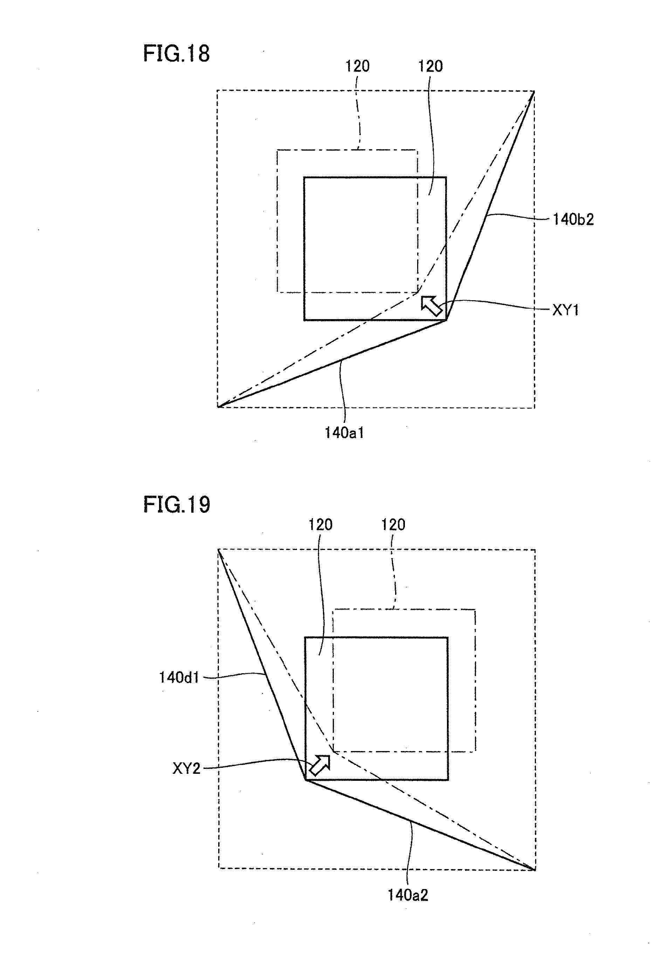

The positioning method of the drive device in the case of using drive device 100C formed in the above-described configuration will be hereinafter described with reference to Figs. 18 to 20. Figs. 18 to 20 are the first to third schematic diagrams each showing the positioning method of drive device 100C.

Referring to Fig. 18, when a prescribed current is caused to simultaneously flow through first driving member 140a1 and fourth driving member 140b2, first driving member 140a1 and fourth driving member 140b2 undergo contraction while driven plate 120 is applied with force acting in the XY1 direction shown by an arrow in Fig. 18.

Referring to Fig. 19, when a prescribed current is caused to simultaneously flow through seventh driving member 140d1 and second driving member 140a2, seventh driving member 140d1 and second driving member 140a2 undergo contraction while driven plate 120 is applied with force acting in the XY2 direction shown by an arrow in Fig. 19.

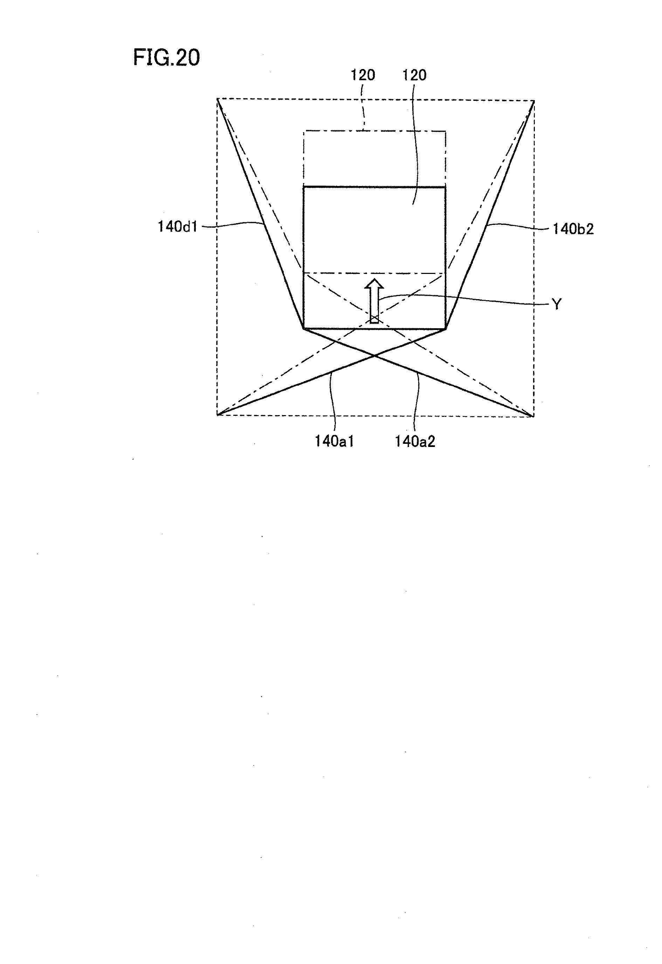

Referring to Fig. 20, based on the movement principle shown in Figs. 18 and 19 described above, when a prescribed current is caused to simultaneously flow through first driving member 140a1, fourth driving member 140b2, seventh driving member 140d1, and second driving member 140a2, first driving member 140a1, fourth driving member 140b2, seventh driving member 140d1, and second driving member 140a2 undergo contraction while driven plate 120 is applied with force acting in the Y direction indicated by an arrow as shown in Fig. 20. Furthermore, a prescribed current may be caused to simultaneously flow through fourth driving member 140b2 and seventh driving member 140d1 so as to cause driven plate 120 to move in the Y direction indicated by an arrow.

In this way, by controlling expansion and contraction of first driving member 140a1, second driving member 140a2, third driving member 140b1, fourth driving member 140b2, fifth driving member 140c1, sixth driving member 140c2, seventh driving member 140d1, and eighth driving member 140d2, driven plate 120 can be moved in parallel in the optional movement direction.

### (Rotation Control)

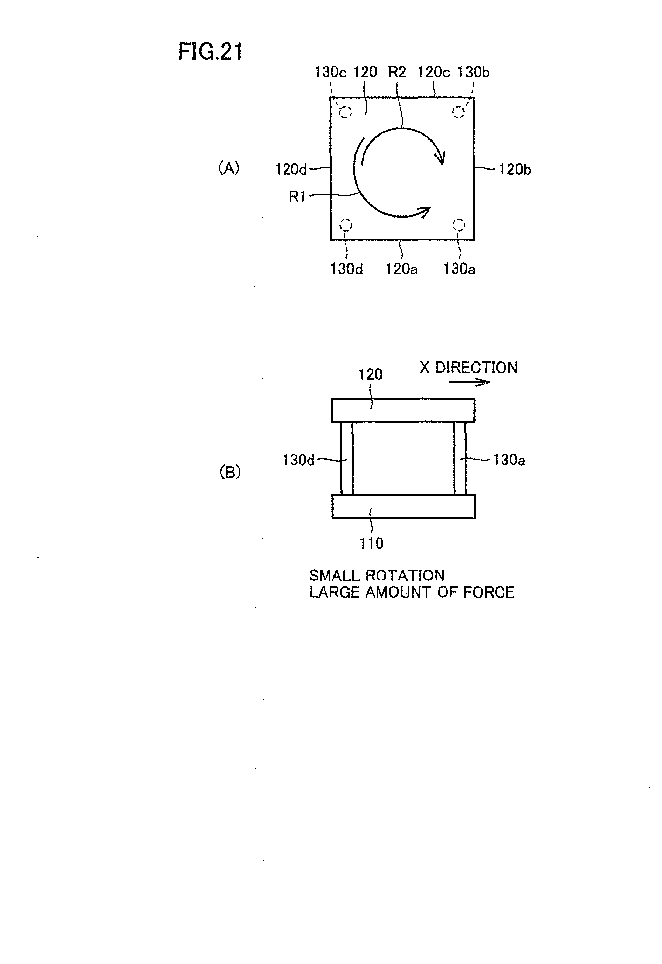

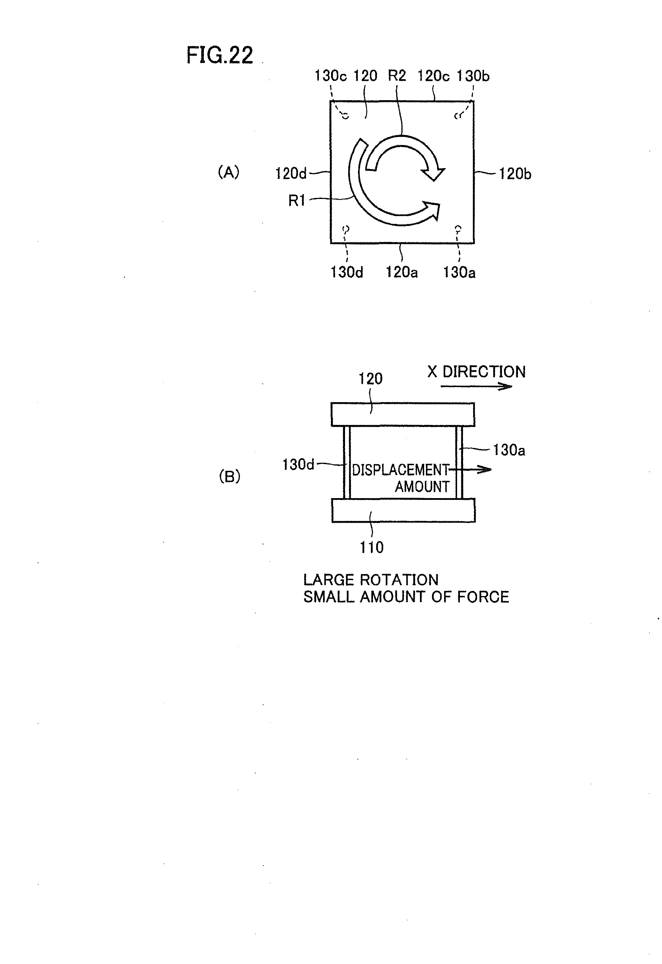

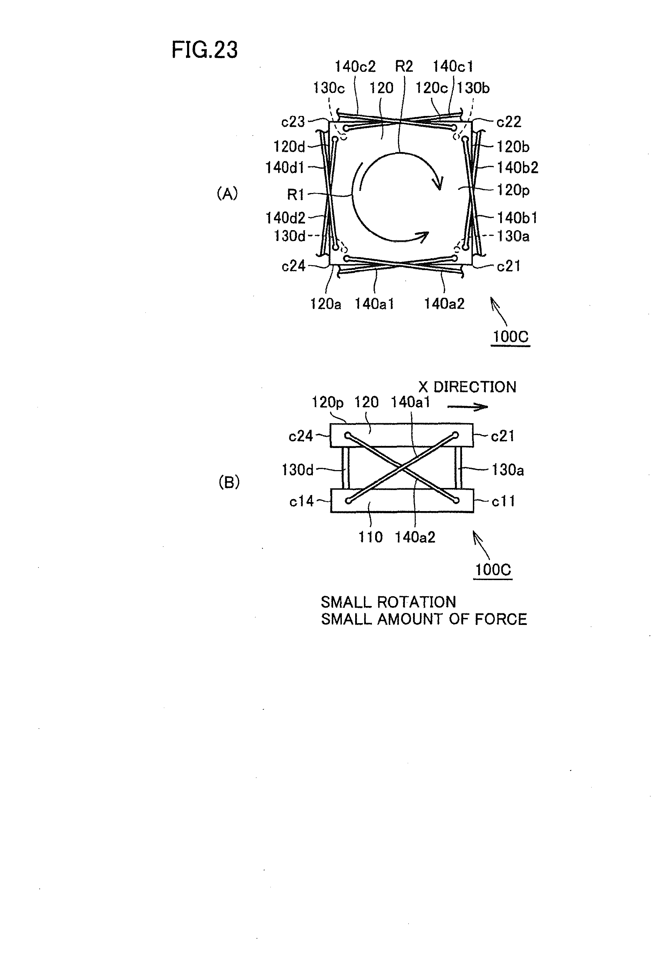

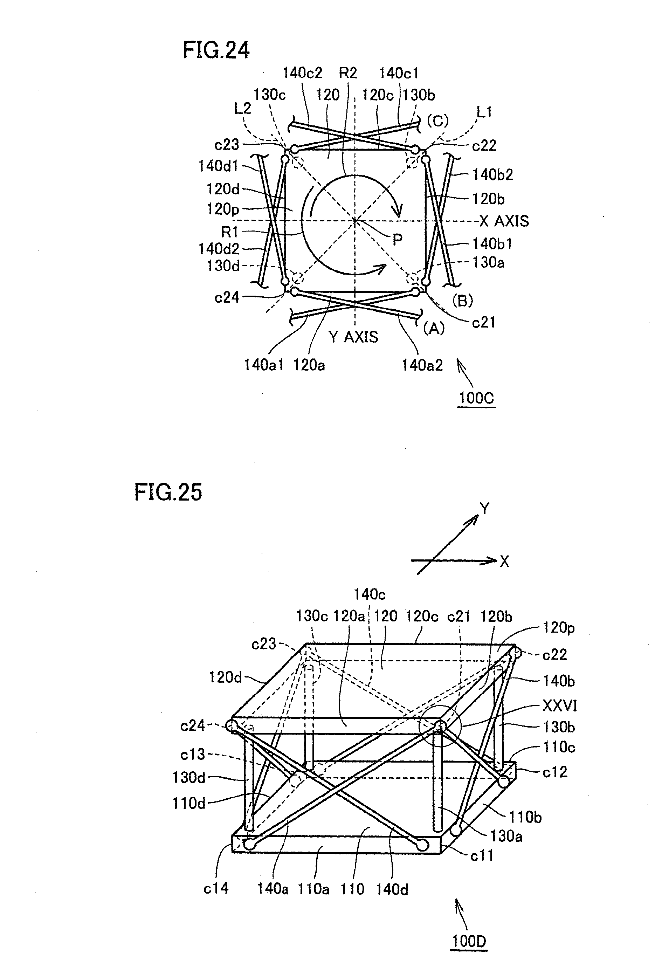

The rotation control for driven plate 120 will be hereinafter described with reference to Figs. 21 to 24. Figs. 21 and 22 are the first and second schematic diagrams each illustrating rotation control, including (A) a plan view and (B) a side view. Fig. 23 is the first diagram illustrating rotation control in the third embodiment, including (A) a plan view and (B) a side view. Fig. 24 is the second diagram (a plan view) illustrating rotation control in the third embodiment.

Referring to Figs. 21 (A) and 21 (B), a driving member is provided between the vicinity of the side surface of base plate 110 and the vicinity of the side surface of driven plate 120. Then, when driven plate 120 is to be moved in the X direction, force (rotating force) causing driven plate 120 to rotate in the R1 direction or the R2 direction is generated.

In order to counteract this rotating force generated in driven plate 120, first support member 130a to fourth support member 130d each are configured to have relatively higher rigidity (to have an increased diameter), so that rotation of driven plate 120 can be suppressed. However, since the rigidity of each of first support member 130a to fourth support member 130d is relatively high, the force required to flex each of first support member 130a to fourth support member 130d is increased.

On the other hand, as shown in Fig. 22, in the case where first support member 130a to fourth support member 130d each are configured to have relatively lower rigidity (to have a decreased diameter), the force required to flex first support member 130a to fourth support member 130d is decreased. However, the rotating force in the R1 direction or R2 direction generated in driven plate 120 becomes increased, so that it becomes difficult to perform movement control of driven plate 120.

Thus, in drive device 100C in the above-described third embodiments shown in Figs. 17 and 23, first driving member 140a1 and fourth driving member 140b2, second driving member 140a2 and third driving member 140b1, fifth driving member 140c1 and eighth driving member 140d2, and sixth driving member 140c2 and seventh driving member 140d1 each are arranged in line symmetry with respect to a diagonal line L2 of driven plate 120 extending through center P, as shown in Fig. 24.

In addition, the configuration shown in the present third embodiment includes driving members that are arranged in line symmetry with respect to a diagonal line L1 of driven plate 120 extending through center P and also with respect to the X-axis and the Y-axis each extending through center P.

By arranging two corresponding driving members so as to be in line symmetry with respect to the defined axis in this way, it becomes possible to counteract, and therefore, suppress the rotating force generated in driven plate 120.

For example, in Fig. 24, when second driving member 140a2 undergoes contraction, the rotating force in the R1 direction acts on driven plate 120. Assuming that diagonal line L2 is defined as a symmetry axis, third driving member 140b1 arranged in line symmetry is to undergo the force acting in the pulling direction by the rotating force in the R1 direction. Consequently, it becomes possible to counteract, and therefore, suppress the rotating force generated in driven plate 120. The same applies also to other driving members arranged in line symmetry.

In this way, in drive device 104C according to the third embodiment, each driving member is used to carry out movement control of driven plate 120 while allowing suppression of the rotating force generated in driven plate 120. Accordingly, the force required for moving driven plate 120 can be reduced while first support member 130a to fourth support member 130d that are readily flexible can be used. Consequently, it becomes possible to implement reduction in size (reduction in thickness and height) of the drive device.

Also as apparent from Fig. 24, for example, two first driving member 140a1 and fourth driving member 140b2 have ends on one side that are fixed to fourth corner portion c14 and second corner portion c12, respectively, that are located in different positions in base plate 110, and also have ends on the other side that are fixed to first corner portion c21 that is located in the same position in driven plate 120.

Furthermore, two second driving member 140a2 and third driving member 140b1 have ends on one side that are fixed to fourth corner portion c24 and second corner portion c22, respectively, that are located in different positions in driven plate 120, and also have ends on the other side that are fixed to first corner portion c11 that is located in the same position in base plate 110. Other driving members each also have one end and the other end that are fixed in the similar manner.

### (Fourth Embodiment)

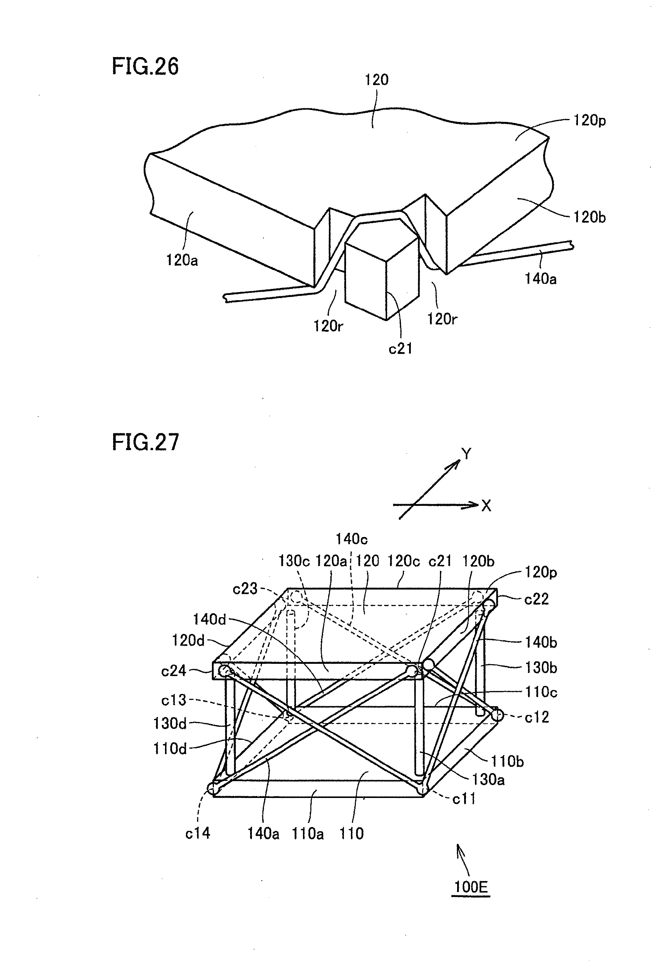

Then, a drive device 100D in the fourth embodiment will be hereinafter described with reference to Figs. 25 and 26. Fig. 25 is a perspective view showing drive device 100D in the present embodiment. Fig. 26 is a partially enlarged perspective view of a region surrounded by a line XXVI in Fig. 25, illustrating a structure for fixing a shape-memory alloy wire serving as a driving member to a driven plate. It is to be noted that the components identical or corresponding to those in drive device 100C in the above-described third embodiment are designated by the same reference characters, and description thereof will not be repeated.

Although an explanation has been given with regard to the case where eight driving members are employed in drive device 100C according to the above-described third embodiment, the present embodiment employs a configuration in which one integrated shape-memory alloy wire is used for first driving member 140a1 and fourth driving member 140b2 in the third embodiment and formed as first driving member 140a; one integrated shape-memory alloy wire is used for third driving member 140b1 and sixth driving member 140c2 and formed as second driving member 140b; one integrated shape-memory alloy wire is used for fifth driving member 140c1 and eighth driving member 140d2 and formed as third driving member 140c; and one integrated shape-memory alloy wire is used for second driving member 140a2 and seventh driving member 140d1 and formed as fourth driving member 140d.

Furthermore, in first driving member 140a, second driving member 140b, third driving member 140c, and fourth driving member 140d, each driving member 140 has both ends fixed to base plate 110, and an intermediate region fixed to driven plate 120.

Referring to Fig. 26, the intermediate region of first driving member 140a is fixed to driven plate 120 by engaging first driving member 140a with a cutout region 120r provided in the vicinity of first corner portion c21 of driven plate 120. The intermediate regions of other driving members each are fixed to driven plate 120 also in the same manner.

Drive device 100D according to the present fourth embodiment can also achieve the same functions and effects as those in drive device 100E according to the third embodiment.

### (Fifth Embodiment)

Then, a drive device 100E in the fifth embodiment will be hereinafter described with reference to Fig. 27. Fig. 27 is a perspective view showing drive device 100E in the present embodiment. It is to be noted that the components identical or corresponding to those in drive device 100C in the above-described third embodiment are designated by the same reference characters, and description thereof will not be repeated.

Although an explanation has been given with regard to the case where eight driving members are employed in drive device 100C according to the above-described third embodiment, the present embodiment employs a configuration in which one integrated shape-memory alloy wire is used for first driving member 140a1 and eighth driving member 140d2 in the third embodiment and formed as first driving member 140a; one integrated shape-memory alloy wire is used for second driving member 140a2 and third driving member 140b1 and formed as second driving member 140b; one integrated shape-memory alloy wire is used for fourth driving member 140b2 and fifth driving member 140c1 and formed as third driving member 140c; and one integrated shape-memory alloy wire is used for sixth driving member 140c2 and seventh driving member 140d1 and formed as fourth driving member 140d.

Furthermore, in first driving member 140a, second driving member 140b, third driving member 140c, and fourth driving member 140d, each driving member 140 has both ends fixed to driven plate 120, and an intermediate region fixed to base plate 110.

The intermediate region of first driving member 140a1 can be fixed to base plate 110 by applying the configuration shown in Fig. 26.

Drive device 100E according to the present fifth embodiment can also achieve the same functions and effects as those in drive device 100E according to the third embodiment.

### (Sixth Embodiment)

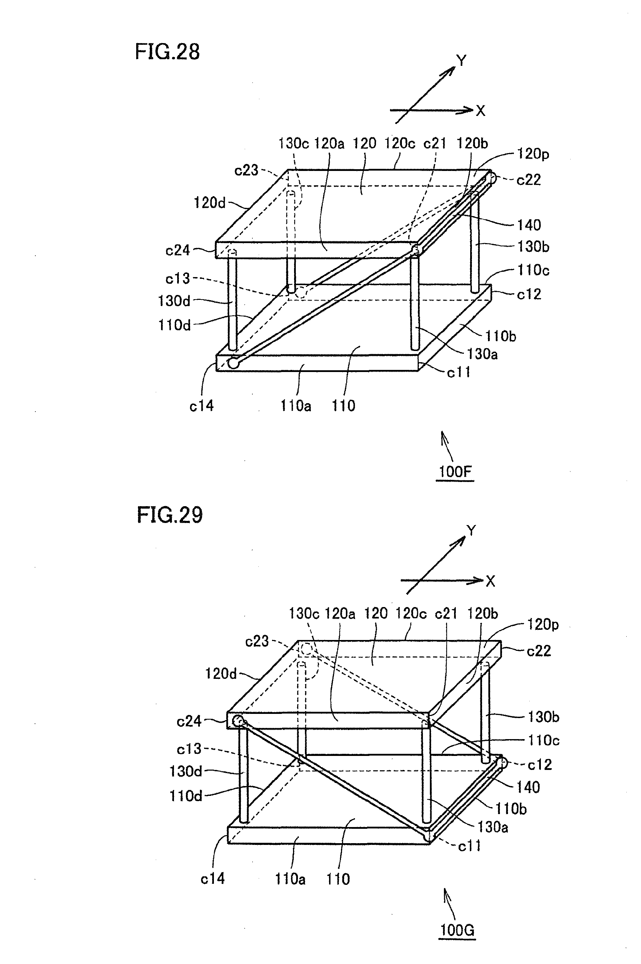

Then, a drive device 100F in the sixth embodiment will be hereinafter described with reference to Fig. 28. Fig. 28 is a perspective view showing drive device 100F in the present embodiment. It is to be noted that the components identical or corresponding to those in drive device 100C in the above-described third embodiment are designated by the same reference characters, and description thereof will not be repeated.

In drive device 100F in the present embodiment, one integrated shape-memory alloy wire is used for driving members located so as to face each other. Fig. 28 shows the case where one integrated shape-memory alloy wire is used for first driving member 140a1 and sixth driving member 140c2 shown in the third embodiment (see Fig. 17) and formed as driving member 140. The intermediate region of this driving member 140 is fixed along second side 120b of driven plate 120.

Although not shown, the same configuration as that of drive device 100C according to the third embodiment can be implemented by employing a configuration in which one integrated shape-memory alloy wire is used for third driving member 140b1 and eighth driving member 140d2 shown in the third embodiment to fix the intermediate region along third side 120c of driven plate 120; a configuration in which one integrated shape-memory alloy wire is used for second driving member 140a2 and fifth driving member 140c1 shown in the third embodiment to fix the intermediate region along fourth side 120d of driven plate 120; and a configuration in which one integrated shape-memory alloy wire is used for fourth driving member 140b2 and seventh driving member 140d1 shown in the third embodiment to fix the intermediate region along first side 120a of driven plate 120.

### (Seventh Embodiment)

Then, a drive device 100G in the seventh embodiment will be hereinafter described with reference to Fig. 29. Fig. 29 is a perspective view showing drive device 100G in the present embodiment. It is to be noted that the components identical or corresponding to those in drive device 100C in the above-described third embodiment are designated by the same reference characters, and description thereof will not be repeated.

In drive device 100G in the present embodiment, one integrated shape-memory alloy wire is used for driving members located so as to face each other. Fig. 29 shows the case where one integrated shape-memory alloy wire is used for second driving member 140a2 and fifth driving member 140c1 shown in the third embodiment and formed as driving member 140. The intermediate region of this driving member 140 is fixed along second side 110b of base plate 110.

Although not shown, the same configuration as that of drive device 100C according to the third embodiment can be implemented by employing a configuration in which one integrated shape-memory alloy wire is used for fourth driving member 140b2 and seventh driving member 140d1 shown in the third embodiment to fix the intermediate region along third side 110c of base plate 110; a configuration in which one integrated shape-memory alloy wire is used for first driving member 140a1 and sixth driving member 140c2 shown in the third embodiment to fix the intermediate region along fourth side 110d of base plate 110; and a configuration in which one integrated shape-memory alloy wire is used for third driving member 140b1 and eighth driving member 140d2 shown in the third embodiment to fix the intermediate region along first side 110a of base plate 110.

### (Eighth Embodiment)

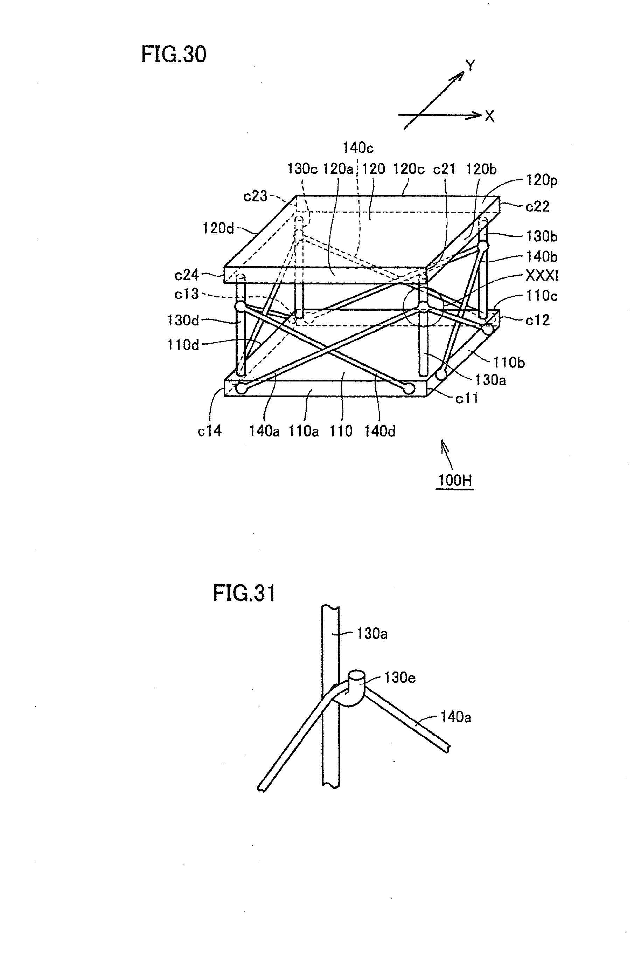

Then, a drive device 100H in the eighth embodiment will be hereinafter described with reference to Figs. 30 and 31. Fig. 30 is a perspective view showing drive device 100H in the present embodiment. Fig. 31 is a partially enlarged perspective view of a region surrounded by a line XXXI in Fig. 30, illustrating a structure for fixing a shape-memory alloy wire to a support member. It is to be noted that the components identical or corresponding to those in drive device 100D in the above-described fourth embodiment are designated by the same reference characters, and description thereof will not be repeated.

Drive device 100H in the present embodiment presents a modification of drive device 100D in the above-described fourth embodiment. In drive device 100D according to the fourth embodiment, the intermediate region of each driving member 140 is fixed to driven plate 120. In contrast, in drive device 100H according to the present embodiment, the intermediate regions of driving members 140a to 140d are fixed to support members 130a to 130d, respectively.

As shown in Fig. 31, each of support members 130a to 130d is provided with an engagement portion 130e formed in a hook shape and protruding outwardly. For example, the intermediate region of first driving member 140a can be engaged with this engagement portion 130e. The same also applies to other driving members.

Drive device 100H according to the present embodiment can also achieve the same functions and effects as those in drive device 100D according to the fourth embodiment.

### (Ninth Embodiment)

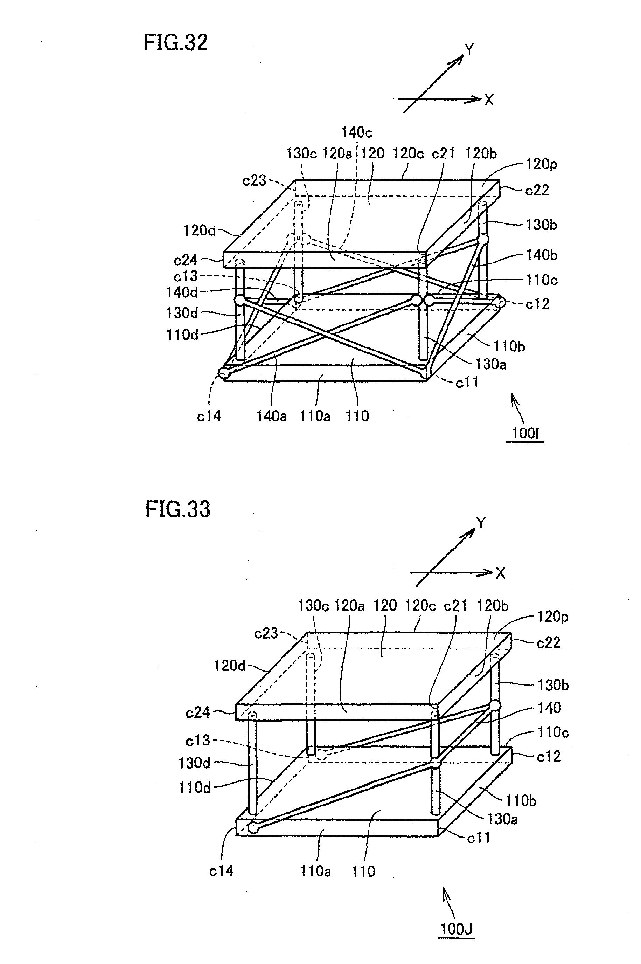

Then, a drive device 1001 in the ninth embodiment will be hereinafter described with reference to Fig. 32. Fig. 32 is a perspective view showing drive device 100I in the present embodiment. It is to be noted that the components identical or corresponding to those in drive device 100E in the above-described fifth embodiment are designated by the same reference characters, and description thereof will not be repeated.

Drive device 100I in the present embodiment presents a modification of drive device 100E in the above-described fifth embodiment. In drive device 100E according to the fifth embodiment, each of driving members 140a to 140d is fixed to driven plate 120. In contrast, in drive device 100I according to the present embodiment, end regions of driving members 140a to 140d are fixed to support members 130a to 130d, respectively.

Drive device 100I according to the present embodiment can also achieve the same functions and effects as those in drive device 100E according to the fifth embodiment.

### (Tenth Embodiment)

Then, a drive device 100J in the tenth embodiment will be hereinafter described with reference to Fig. 33. Fig. 33 is a perspective view showing drive device 100J in the present embodiment. It is to be noted that the components identical or corresponding to those in drive device 100F in the above-described sixth embodiment are designated by the same reference characters, and description thereof will not be repeated.

Drive device 100J in the present embodiment presents a modification of drive device 100F in the above-described sixth embodiment. In drive device 100F according to the sixth embodiment, the intermediate regions of each driving member 140 are fixed to driven plate 120. In contrast, in drive device 100J according to the present embodiment, the intermediate regions of each driving member 140 are fixed to first support member 130a and second support member 130b, respectively.

The structure shown in Fig. 31 can be applied to the structure for fixing the intermediate regions of each driving member 140 to first support member 130a and second support member 130b.

Drive device 100J according to the present embodiment can also achieve the same functions and effects as those in drive device 100F according to the sixth embodiment.

### (Eleventh Embodiment)

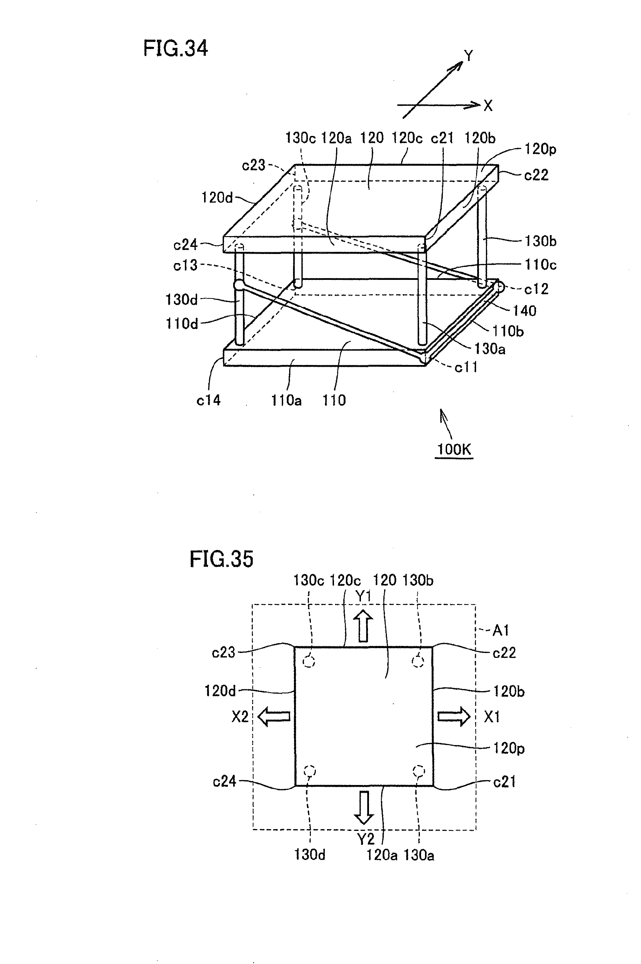

Then, a drive device 100K in the eleventh embodiment will be hereinafter described with reference to Fig. 34. Fig. 34 is a perspective view showing drive device 100K in the present embodiment. It is to be noted that the components identical or corresponding to those in drive device 100G in the above-described seventh embodiment are designated by the same reference characters, and description thereof will not be repeated.

Drive device 100K in the present embodiment presents a modification of drive device 100G in the above-described seventh embodiment. In drive device 100G according to the seventh embodiment, the end regions of each driving member 140 are fixed to driven plate 120. In contrast, in drive device 100K according to the present embodiment, end regions of each driving member 140 are fixed to third support member 130c and fourth support member 130d, respectively.

Drive device 100K according to the present embodiment can also achieve the same functions and effects as those in drive device 100G according to the seventh embodiment.

### (Twelfth Embodiment)

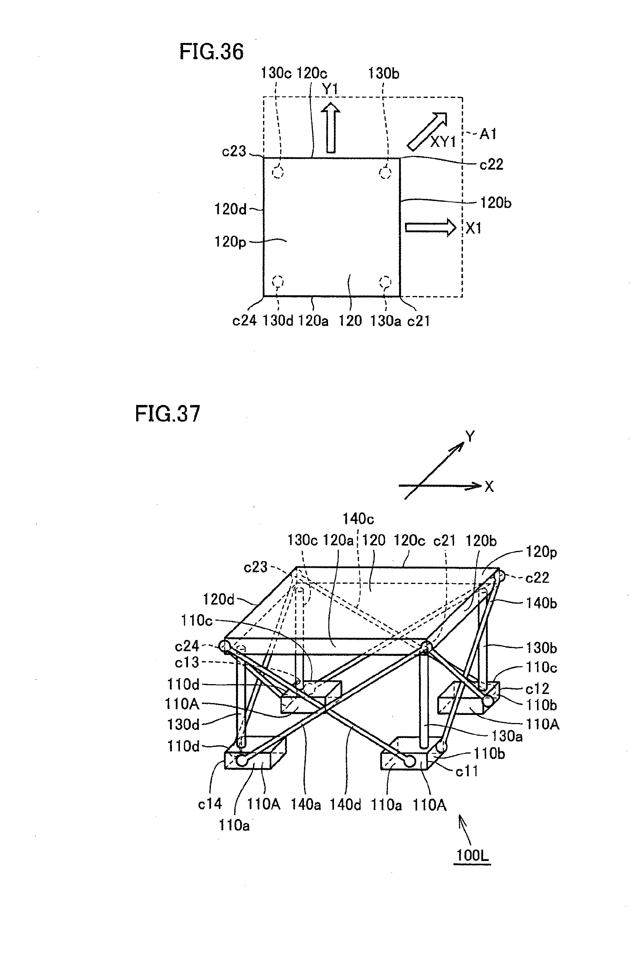

In the present embodiment, setting of the initial position of driven plate 120 in each of the above-described embodiments will be described with reference to Figs. 35 and 36. Figs. 35 and 36 are the first and second plan views each showing the initial position state of the driven plate.

Referring to Fig. 35, in each of the above-described embodiments, driven plate 120 is located, as an initial position, in the center position of a moving range A1 of driven plate 120 surrounded by a dotted line in Fig. 35. In this case, located in the center means the state where the center of driven plate 120 overlaps with the center position of moving range A1, in which case the amount of expansion and contraction of each drive device is set such that driven plate 120 moves by the same amount in the X1 direction, the X2 direction, the Y1 direction, and the Y2 direction.

However, the setting of the amount of expansion and contraction is not limited to that shown in Fig. 35. For example, as shown in Fig. 36, driven plate 120 may be located, as an initial position, in the position displaced from the center of moving range A1 of driven plate 120. Accordingly, it becomes possible to define the moving range of driven plate 120 in accordance with the configuration of each of various units in which the present drive device is mounted.

### (Thirteenth Embodiment)

In the present embodiment, referring to Fig. 37, an explanation will be given with regard to a drive device 100L employing a base plate structure that is different from base plate 110 in each of the above-described embodiments. Fig. 37 is a perspective view showing drive device 100L in the present embodiment. Although Fig. 37 illustrates the case where the base plate structure according to the present embodiment is employed for drive device 100D according to the fourth embodiment shown in Fig. 25, the base plate structure according to the present embodiment can also be applied to the drive device according to each of other embodiments.

Although base plate 110 in each embodiment as described above is formed of one plate member, a base plate 110A in the present embodiment is provided separately for each of support members 130a to 130d. Even this configuration can also achieve the same functions and effects as those in drive device 100D according to the fourth embodiment.

### (Fourteenth Embodiment)

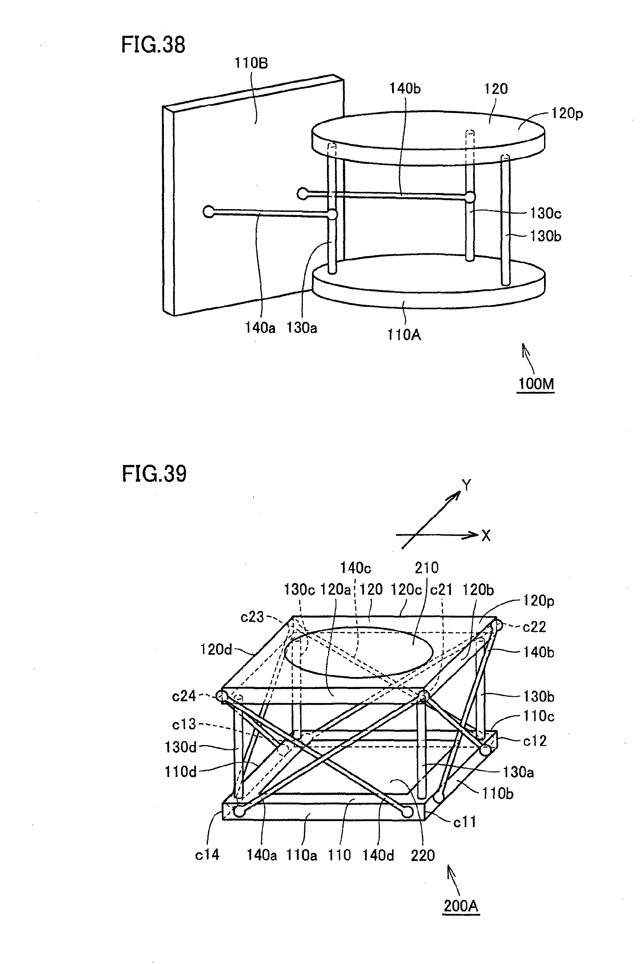

A drive device 100M in the present embodiment will be hereinafter described with reference to Fig. 38. Fig. 38 is a perspective view showing drive device 100M in the present embodiment.

Each drive device in each embodiment as described above employs a structure in which four support members 130a to 130d are used, and each driving member 140 and support member 130 are fixed to the same base plate 110 when each driving member 140 is fixed to base plate 110. However, the present invention is not limited to this structure.

For example, three support members 130a to 130c can be disposed so as to be located at the vertices of a triangle. Furthermore, it is also possible to employ a structure including a base plate 110B that is different from base plate 110A to which three support members 130a to 130c are fixed, in which driving member 140 is fixed to this base plate 110B.

Furthermore, the shapes of base plate 110A and driven plate 120 each are not limited to a rectangular shape, but may be formed in a circular shape.

### (Fifteenth Embodiment)

Referring to Fig. 39, a lens unit 200A employing the above-described drive device in the present embodiment will be hereinafter described. Fig. 39 is a perspective view showing lens unit 200A in the present embodiment.

In lens unit 200A according to the present embodiment, drive device 100D according to the fourth embodiment is used. Therefore, the components identical to those in drive device 100D are designated by the same reference characters, and description thereof will not be repeated.

This lens unit 200A includes a lens 210 provided in driven plate 120 and an imaging element 220 disposed on base plate 110 at the image formation position of the light having passed through lens 210.

According to this lens unit 200A, driving members 140a to 140d each made of a shape-memory alloy wire are caused to expand and contract as appropriate in the axial direction, thereby moving lens 210 in parallel, so that the image formation position of lens 210 with respect to imaging element 220 can be changed. The detailed driving method will be described later.

### (Sixteenth Embodiment)

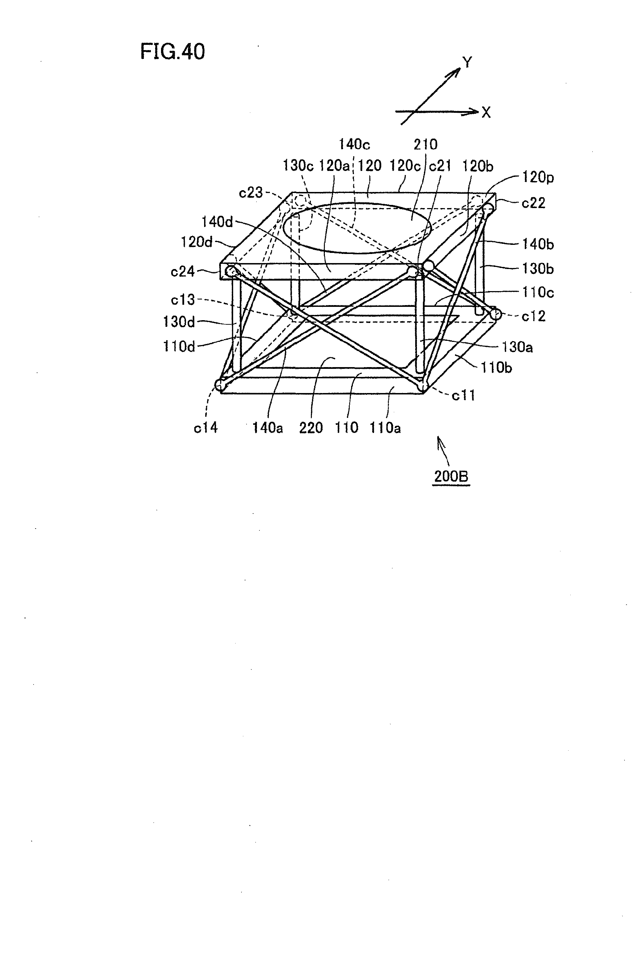

Referring to Fig. 40, a lens unit 200B employing the above-described drive device in the present embodiment will be hereinafter described. Fig. 40 is a perspective view showing lens unit 200B according to the present embodiment.

In lens unit 200B according to the present embodiment, drive device 100E in the fifth embodiment is used. Therefore, the components identical to those in drive device 100E are designated by the same reference characters, and description thereof will not be repeated.

As with the above-described lens unit 200A, this lens unit 200B includes a lens 210 provided in driven plate 120, and an imaging element 220 disposed on base plate 110 at the image formation position of the light having passed through lens 210.

According to this lens unit 200B, driving members 140a to 140d each made of a shape-memory alloy wire are caused to expand and contract as appropriate in the axial direction, thereby moving lens 210 in parallel, so that the image formation position of lens 210 with respect to imaging element 220 can be changed. The detailed driving method will be described later.

### (Camera-Shake Correction)

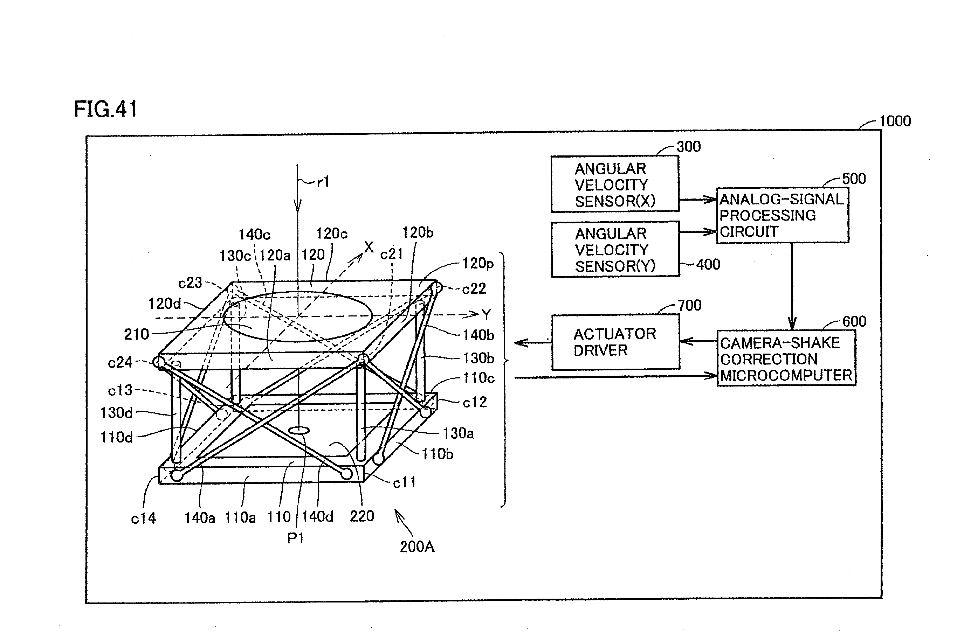

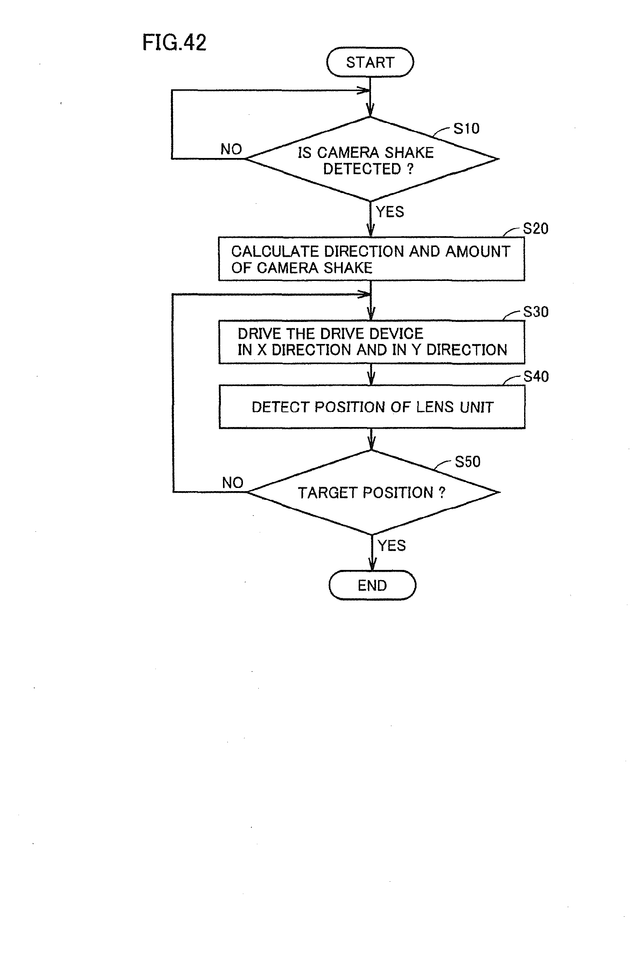

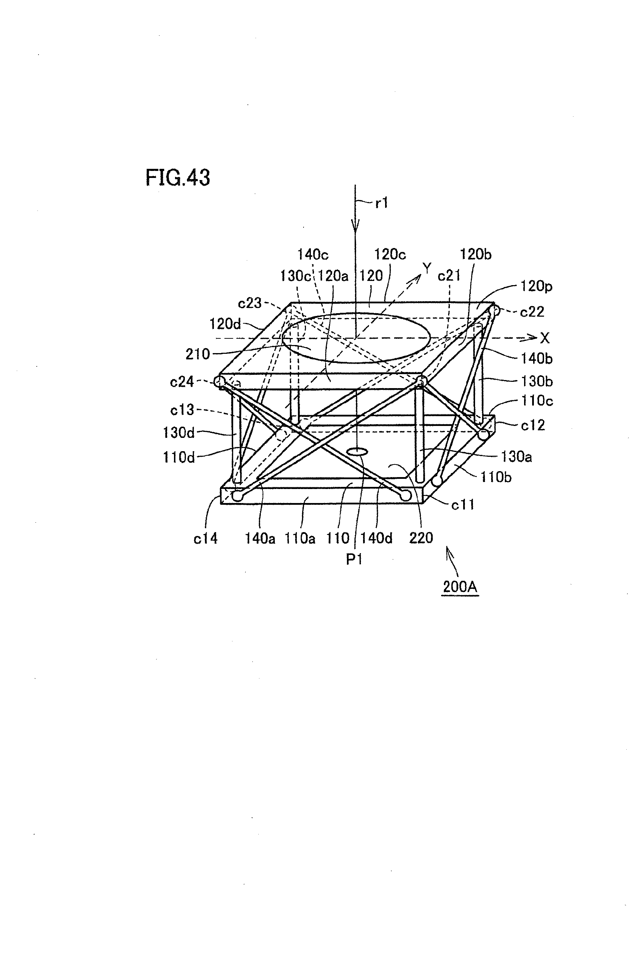

Then, referring to Figs. 41 to 45, an explanation will be given with regard to camera-shake correction performed in the case where the above-described lens unit is mounted in an apparatus provided with a gyro. Fig. 41 is a functional block diagram illustrating camera-shake correction control in the lens unit. Fig. 42 is a flow diagram illustrating camera-shake correction control in the lens unit. Figs. 43 to 45 are the first to third perspective views illustrating a camera-shake correction in the lens unit. The lens unit will be explained with regard to the case where lens unit 200A in the fifteenth embodiment shown in Fig. 39 is used. In addition, the same applies also to the case where lens unit 200B in the sixteenth embodiment shown in Fig. 40 is used.

Referring to Fig. 41, an apparatus (for example, a digital camera, and the like) 1000 provided with lens unit 200A will be described. Apparatus 1000 includes an angular velocity sensor 300 detecting a deviation in the X direction, and an angular velocity sensor 400 detecting a deviation in the Y direction. Signals from angular velocity sensors 300 and 400 are input into an analog-signal processing circuit 500. A prescribed signal is transferred between analog-signal processing circuit 500 and a camera-shake correction microcomputer 600. The control signal output from camera-shake correction microcomputer 600 is transmitted through an actuator driver 700 to lens unit 200A.

Referring to Fig. 42, according to camera-shake correction control in camera-shake correction microcomputer 600, camera shake is first detected based on the signals from angular velocity sensors 300 and 400 (step 10, which will be hereinafter abbreviated as S10). Then, when camera shake is detected, the direction and the amount of camera shake are calculated (S20). Then, driven plate 120 of lens unit 200A is moved in the X direction and in the Y direction (S40).

Then, the position of the lens unit is detected (S50). The position of the lens unit is detected by calculation based on the length of each driving member 140.

For example, each driving member 140 is energized so as to achieve a resistance value in accordance with the target movement position for positioning the lens unit at a target position, to change the shape of each driving member 140, thereby causing the lens unit to move to the target movement position.

Specifically, the difference value between the initial start resistance value predetermined as a resistance value of each driving member 140 at the time when the lens unit starts to move in the initial stage and the post-movement resistance value corresponding to a resistance value of each driving member 140 at the time when the lens unit is located in a predetermined movement position is stored in advance. Then, the resistance value of each driving member 140 is detected, thereby allowing detection of the position of the lens unit.

Then, it is determined whether the lens unit is located in the target movement position or not (S50). If the lens unit is not located in the target movement position, the process returns to S30. If the lens unit is located in the target movement position, camera-shake correction control is ended.

A specific example of camera-shake correction control described above is shown in Figs. 43 to 45. Fig. 43 shows the case where camera shake does not occur in lens unit 200A, in which case an image is formed at a prescribed position P1 in imaging element 220 by light r1 having passed through lens 210.

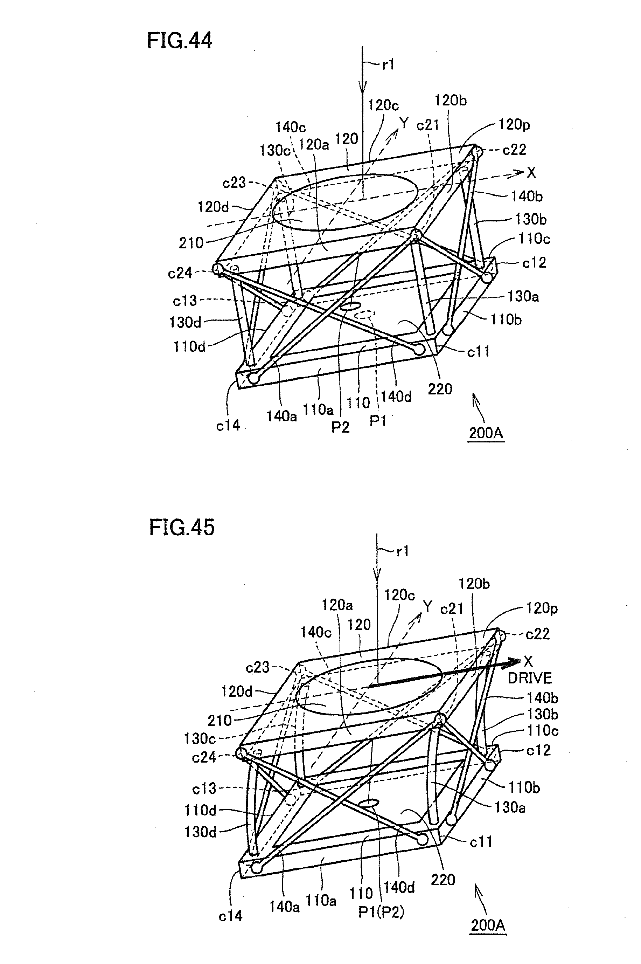

Referring to Fig. 44, when camera shake occurs in lens unit 200A, light r1 having passed through lens 210 does not form an image at prescribed position P1 in imaging element 220, but forms an image at a displaced position P2.

Referring to Fig. 45, when camera-shake correction microcomputer 600 detects camera shake, driven plate 120 is moved in the X direction and in the Y direction such that an image is formed at prescribed position P1 in imaging element 220.

In this way, by using the drive device in each of the above-described embodiments, camera-shake correction can be carried out in apparatus (for example, a digital camera, and the like) 1000 provided with lens unit 200A.

### (Seventeenth Embodiment)

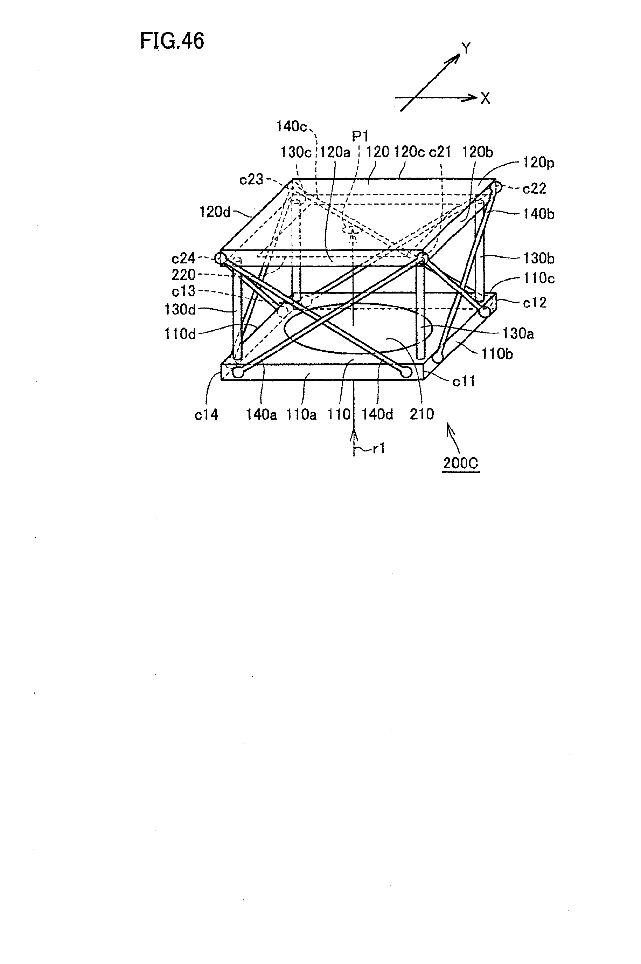

Referring to Fig. 46, a lens unit 200C employing the above-described drive device in the present embodiment will be hereinafter described. Fig. 46 is a perspective view showing lens unit 200C according to the present embodiment.

Lens unit 200A according to the fifteenth embodiment shown in Fig. 39 includes lens 210 in driven plate 120 and imaging element 220 on base plate 110. In contrast, lens unit 200C in the present embodiment includes lens 210 in base plate 110 and imaging element 220 on driven plate 120.

Also by employing this configuration, the position of the imaging element is controlled, so that the functions and effects similar to those achieved in lens unit 200A according to the fifteenth embodiment can be achieved. Furthermore, the configuration of the present embodiment can also be employed for lens unit 200C in the sixteenth embodiment.

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

1, 100A, 100B, 100C, 100D, 100E, 100F, 100G, 100H, 100I, 100J, 100K, 100L, 100M drive device, 5 swaging jig, 5a, 150t taper, 110, 110A, 110B base plate, 110a, 120a first side, 110b, 120b second side, 110c, 120c third side, 110d, 120d fourth side, 110h fixing hole, 111 low elasticity member, 120 driven plate, 120p flat plane, 120r cutout region, 130 support member, 130a first support member, 130b second support member, 130c third support member, 130d fourth support member, 130P rotation bearing, 130e engagement portion, 140, 140a to 140d driving member, 140a, 140a1 first driving member, 140a2, 140b second driving member, 140b1, 140c third driving member, 140b2, 140d fourth driving member, 140c1 fifth driving member, 140c2 sixth driving member, 140d1, seventh driving member, 140d2 eighth driving member, 150 fixing member, 150a end face, 150b end, 150c non-deforming portion, 150v groove, 160 lead wire, 200A, 200B, 200C lens unit, 210 lens, 220 imaging element, 300, 400 angular velocity sensor, 500 analog-signal processing circuit, 600 correction microcomputer, 700 actuator driver, 1000 apparatus, c11, c21 first corner portion, c12, c22 second corner portion, c13, c23 third corner portion, c14, c24 fourth corner portion.

## Claims

1. A drive device comprising:
a base member;
a driven member disposed at a prescribed distance from said base member;
a support member coupling said base member and said driven member, and supporting said driven member so as to substantially maintain said prescribed distance between said base member and said driven member from start to end of movement of said driven member; and
a driving member driving said driven member so as to be moved in parallel from start to end of movement,
said driving member causing a linear shape-memory alloy wire to expand and contract to move said driven member.

2. The drive device according to claim 1, wherein said driving member is disposed between said base member and said driven member.

3. The drive device according to claim 2, wherein
said driving member has
both ends each fixed to said base member, and
an intermediate region fixed to said driven member.

4. The drive device according to claim 2, wherein
said driving member has
both ends each fixed to said driven member, and
an intermediate region fixed to said base member.

5. The drive device according to claim 1, wherein said driving member is disposed between said base member and said support member.

6. The drive device according to claim 5, wherein
said driving member has
both ends each fixed to said base member, and
an intermediate region fixed to said support member.

7. The drive device according to claim 5, wherein
said driving member has
both ends each fixed to said support member, and
an intermediate region fixed to said base member.

8. The drive device according to any one of claims 1 to 7, wherein said driving member includes two said shape-memory alloy wires.

9. The drive device according to claim 8, wherein two said shape-memory alloy wires are located in line symmetry with respect to a defined axis.

10. The drive device according to claim 9, wherein two said shape-memory alloy wires have ends on one side that are fixed to said base member at different positions and ends on the other side that are fixed to said driven member at the same position; or two said shape-memory alloy wires have ends on one side that are fixed to said driven member at different positions and ends on the other side that are fixed to said base member at the same position.

11. The drive device according to claim 10, wherein
two said shape-memory alloy wires are integrated in one shape-memory alloy wire,
said one shape-memory alloy wire has both ends fixed to said base member at different positions, and an intermediate region fixed to said driven member; or
said one shape-memory alloy wire has both ends fixed to said driven member at different positions, and an intermediate region fixed to said base member.

12. The drive device according to claim 1 or 2, wherein
said driven member has a first portion, a second portion, a third portion facing said first portion across the center of said driven member, and a fourth portion facing said second portion across the center of said driven member,
said base member has a fifth portion facing said first portion, a sixth portion facing said second portion, a seventh portion facing said third portion, and an eighth portion facing said fourth portion, and
said shape-memory alloy wire includes
a first shape-memory alloy wire disposed between said first portion and said eighth portion,
a second shape-memory alloy wire disposed between said fourth portion and said fifth portion,
a third shape-memory alloy wire disposed between said second portion and said fifth portion,
a fourth shape-memory alloy wire disposed between said first portion and said sixth portion,
a fifth shape-memory alloy wire disposed between said third portion and said sixth portion,
a sixth shape-memory alloy wire disposed between said second portion and said seventh portion,
a seventh shape-memory alloy wire disposed between said fourth portion and said seventh portion, and
an eighth shape-memory alloy wire disposed between said third portion and said eighth portion.

13. The drive device according to claim 12, wherein
said first shape-memory alloy wire and said fourth shape-memory alloy wire are integrated in one shape-memory alloy wire,
said second shape-memory alloy wire and said seventh shape-memory alloy wire are integrated in one shape-memory alloy wire,
said third shape-memory alloy wire and said sixth shape-memory alloy wire are integrated in one shape-memory alloy wire, and
said fourth shape-memory alloy wire and said fifth shape-memory alloy wire are integrated in one shape-memory alloy wire.

14. The drive device according to claim 1 or 2, wherein
said base member has a first portion, a second portion, a third portion facing said first portion across the center of said base member, and a fourth portion facing said second portion across the center of said base member,
said support member includes
a first support member coupling said first portion and said driven member,
a second support member coupling said second portion and said driven member,
a third support member coupling said third portion and said driven member, and
a fourth support member coupling said fourth portion and said driven member, and
said linear shape-memory alloy wire includes
a first shape-memory alloy wire having one end fixed to said fourth portion, the other end fixed to said second portion, and an intermediate region fixed to said first support member,
a second shape-memory alloy wire having one end fixed to said first portion, the other end fixed to said third portion, and an intermediate region fixed to said second support member,
a third shape-memory alloy wire having one end fixed to said second portion, the other end fixed to said fourth portion, and an intermediate region fixed to said third support member, and
a fourth shape-memory alloy wire having one end fixed to said third portion, the other end fixed to said first portion, and an intermediate region fixed to said fourth support member.

15. The drive device according to any one of claims 1 to 9, wherein said support member is a wire rod.

16. The drive device according to any one of claims 1 to 10, wherein
in a junction between said support member and said base member,
a low elasticity member that is lower in elasticity than said base member is provided between said support member and said base member.

17. The drive device according to any one of claims 1 to 10, wherein
in a junction between said support member and said base member,
a rotation bearing is provided between said support member and said base member.

18. The drive device according to any one of claims 1 to 12, wherein said driven member is located, as an initial position, in a center position of a moving range of said driven member.

19. The drive device according to any one of claims 1 to 12, wherein said driven member is located, as an initial position, in a position displaced from the center of a moving range of said driven member.

20. The drive device according to claim 1, wherein
said driven member has a flat plane, and
said driving member drives said driven member so as to move said flat plane in parallel from start to end of movement.

21. A lens unit comprising:
a drive device according to any one of claims 1 to 20;
a lens provided in said driven member; and
an imaging element disposed on said base member at an image formation position of light having passed through said lens,
said shape-memory alloy wire being caused to expand and contract to move said lens such that the image formation position of said lens with respect to said imaging element can be changed.

22. A lens unit comprising:
a drive device according to any one of claims 1 to 20;
a lens provided in said base member; and
an imaging element disposed on said driven member at an image formation position of light having passed through said lens,
said shape-memory alloy wire being caused to expand and contract to move said imaging element such that the image formation position of said lens with respect to said imaging element can be changed.
